(19) Europäisches Patentamt / European Patent Office / Office européen des brevets

(11) **EP 4 137 810 B1**

(12) **EUROPÄISCHE PATENTSCHRIFT**

(45) Veröffentlichungstag und Bekanntmachung des Hinweises auf die Patenterteilung:
**16.07.2025 Patentblatt 2025/29**

(21) Anmeldenummer: **22201337.7**

(22) Anmeldetag: **10.12.2019**

(51) Internationale Patentklassifikation (IPC):
***G01N 27/36*** *(2006.01)* ***G01N 27/401*** *(2006.01)*
***G01N 27/30*** *(2006.01)*

(52) Gemeinsame Patentklassifikation (CPC):
**G01N 27/401; G01N 27/36;** G01N 27/301

(54) **EINSTABMESSKETTE MIT HYDROGEL AUFWEISENDEM DIAPHRAGMA UND VERFAHREN ZUM HERSTELLEN DER EINSTABMESSKETTE**

SINGLE ROD MEASURING CHAIN WITH HYDROGEL DIAPHRAGM AND METHOD FOR PRODUCING THE SINGLE ROD MEASURING CHAIN

CHAÎNE DE MESURE À UNE TIGE AVEC DIAPHRAGME PRÉSENTANT DE L'HYDROGEL ET PROCÉDÉ DE FABRICATION DE LA CHAÎNE DE MESURE À UNE TIGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.12.2018 DE 102018132108**

(43) Veröffentlichungstag der Anmeldung:
**22.02.2023 Patentblatt 2023/08**

(60) Teilanmeldung:
**25178456.7 / 4 582 798**

(62) Dokumentnummer(n) der früheren Anmeldung(en) nach Art. 76 EPÜ:
**19824246.3 / 3 894 848**

(73) Patentinhaber: **Hamilton Bonaduz AG**
**7402 Bonaduz (CH)**

(72) Erfinder: **GAUPP, Theo**
**7402 Bonaduz (CH)**

(74) Vertreter: **PATERIS Patentanwälte PartmbB**
**Postfach 33 07 11**
**80067 München (DE)**

(56) Entgegenhaltungen:
**EP-A1- 1 172 648**
**WO-A2-2006/018425**
**DE-A1- 102009 055 092**
**DE-T2- 69 526 366**
**US-A1- 2005 133 369**

- **FERREIRA N N ET AL: "Recent advances in smart hydrogels for biomedical applications: From self-assembly to functional approaches", EUROPEAN POLYMER JOURNAL, PERGAMON PRESS LTD. OXFORD, GB, vol. 99, 6 December 2017 (2017-12-06), pages 117 - 133, XP085351222, ISSN: 0014-3057, DOI: 10.1016/ J.EURPOLYMJ.2017.12.004**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Processed by Luminess, 75001 PARIS (FR)

## Beschreibung

Die Erfindung betrifft eine Einstabmesskette und ein Verfahren zum Herstellen der Einstabmesskette.

Unter einer Einstabmesskette wird eine Kombination aus einer Arbeitselektrode und einer Referenzelektrode verstanden, die in einem einzelnen Stab untergebracht sind. Für den Begriff Arbeitselektrode wird auch synonym der Begriff Messelektrode verwendet und für den Begriff Referenzelektrode wird auch synonym der Begriff Bezugselektrode verwendet. Bei der Einstabmesskette kann es sich beispielsweise um einen Redox-Sensor oder um eine pH-Einstabmesskette handeln, mittels der ein pH-Wert bestimmbar ist. Bei der pH-Einstabmesskette kann es sich beispielsweise um eine pH-Glaselektrode handeln. Beispiele für Einstabmessketten sind in DE 10 2009 055092 A1, US 2005/133369 A1, sowie in EP 1 172 648 A1 beschrieben.

Bei der Referenzelektrode handelt es sich oftmals um einen Metalldraht, der in eine Salzlösung getaucht ist. Häufig ist die Referenzelektrode eine Silber-Silberchlorid-Elektrode, die einen Silberdraht aufweist, der von einer AgCl-Schicht ummantelt ist, wobei der Silberdraht mit der AgCl-Schicht in eine KCl-Lösung getaucht ist. Die KCl-Lösung ist begrenzt von einem Diaphragma. In einem Betrieb der Einstabmesskette wird das Diaphragma mit einem zu untersuchenden Messfluid kontaktiert. Das Diaphragma zeichnet sich dadurch aus, dass es eine Durchmischung der KCl-Lösung und des Messfluides verhindert, jedoch einen Ladungstransport zwischen der KCl-Lösung und dem Messfluid ermöglicht. Das Diaphragma ist herkömmlich porös, um den Ladungstransport zu erlauben. Nachteilig jedoch ist, dass das Diaphragma aufgrund seiner porösen Struktur eine große Oberfläche hat, die im Laufe der Zeit zu voranschreitenden Verschmutzungen neigt. Die Verschmutzungen können den Ladungstransport erschweren, was dazu führt, dass eine mit der Einstabmesskette durchgeführte Messung fehlerbehaftet ist.

Zudem ist es problematisch, dass KCl via das Diaphragma aus der Einstabmesskette fließen kann, was sich durch Ausblühungen von KCl an der Außenseite des Diaphragmas bemerkbar macht. Dies führt dazu, dass sich die KCl-Konzentration der KCl-Lösung verändert, was wiederum dazu führt, dass sich das elektrochemische Potential der Referenzelektrode ändert. Das sich ändernde elektrochemische Potential führt dazu, dass die Messung mit zusätzlichen Fehlern behaftet ist. Selbst wenn nur ein geringer Massenstrom des KCl aus der Einstabmesskette fließt, so treten die fehlerbehafteten Messungen nach entsprechend langer Zeit auf. Um den Massenstrom des aus der Einstabmesskette fließenden KCl zu verringern, ist es herkömmlich erforderlich, die Einstabmesskette in einer Flüssigkeit zu lagern, die das Diaphragma von außerhalb der Einstabmesskette feucht hält. Die Einstabmesskette hat demnach aufgrund der voranschreitenden Verschmutzungen und des voranschreitenden KCl Ausflusses eine begrenzte Lebensdauer, innerhalb derer die Einstabmesskette fehlerfreie Messungen durchführen kann.

Aufgabe der Erfindung ist es daher, eine Einstabmesskette und ein Verfahren zum Herstellen der Einstabmesskette zu schaffen, mit denen eine Lebensdauer der Einstabmesskette verlängerbar ist, wobei innerhalb der Lebensdauer die Einstabmesskette fehlerfreie Messungen durchführen kann.

Die erfindungsgemäße Einstabmesskette wird durch Anspruch 1 definiert.

Überraschenderweise wurde gefunden, dass ein Ausfluss von dem ersten elektrisch leitfähigen Fluid via das Diaphragma bei der erfindungsgemäßen Einstabmesskette viel niedriger als bei einer herkömmlichen Einstabmesskette ist, die ein poröses Diaphragma aufweist. Gleichzeitig ist jedoch ein Ladungstransport zwischen dem ersten elektrisch leitfähigen Fluid und dem Messfluid ermöglicht. Zudem neigt das Hydrogel aufgrund des Fehlens der Poren weniger zu Verschmutzungen, die den Ladungstransport erschweren würden. Aufgrund des niedrigen Ausflusses des ersten elektrisch leitfähigen Fluides und der geringen Neigung des Hydrogels zu Verschmutzungen hat die Einstabmesskette eine lange Lebensdauer, innerhalb derer die Einstabmesskette fehlerfreie Messungen durchführen kann. Zudem ist der Massenfluss des via das Diaphragma aus der Einstabmesskette ausfließenden ersten elektrisch leitfähigen Fluides derart gering, dass es nicht erforderlich ist, die Einstabmesskette in einer Flüssigkeit zu lagern. Außerdem ist das Hydrogel elastisch, so dass Temperaturschwankungen ausgeglichen werden können und dadurch die Einstabmesskette abgedichtet bleibt. Zudem ist die Einstabmesskette einfach herstellbar, indem das Hydrogel in seinem trockenen Zustand in eine Öffnung der Einstabmesskette eingebracht wird, das Hydrogel anschließend mit dem ersten elektrisch leitfähigen Fluid in Kontakt gebracht wird, wodurch das Hydrogel aufquillt und die Öffnung abdichtet. Das Kontaktieren des ersten elektrisch leitfähigen Fluides mit dem Hydrogel kann gleichzeitig mit dem Befüllen der Einstabmesskette mit dem ersten elektrisch leitfähigen Hydrogel erfolgen.

Durch den geringen KCl Ausfluss bilden sich keine Kristalle an dem Diaphragma. Dies ist eine Voraussetzung dafür, dass die Einstabmesskette kompatibel mit GMP (Good Manufacturing Practice) Richtlinien ist. Zudem konnte gezeigt werden, dass sich die Einstabmesskette mit einer Gammastrahlung sterilisieren lässt, ohne dass dabei die Funktionalität der Einstabmesskette, insbesondere des Diaphragmas, Einbußen erleidet. Damit eignet sich die Einstabmesskette dazu in Fermentern, insbesondere in Einwegfermentern, verwendet zu werden. Bei den herkömmlichen porösen Diaphragmen besteht das Problem, dass in dem Fall, dass das Messfluid Sulfid enthält, Silbersulfid ausfällt und die Poren des Diaphragmas verstopft, was den Ladungstransport zwischen dem ersten elektrisch leitfähigen Fluid und dem Messfluid erschwert und dadurch zu fehlerbehafteten Messungen führt. Bei dem Diaphragma mit dem Hydrogel hingegen fällt zwar auch das Silbersulfid in dem Diaphragma aus. Dies führt aber dazu, dass nun weiteres elektrisch

leitfähiges Fluid, insbesondere Wasser, in das Diaphragma diffundiert. Das Diaphragma quillt dadurch weiter auf, was den Ladungstransport zwischen dem ersten elektrisch leitfähigen Fluid und dem Messfluid erleichtert.

Das Hydrogel weist bevorzugt ein thermoplastisches Polyurethan auf. Insbesondere besteht das Hydrogel im Wesentlichen aus dem thermoplastischen Polyurethan. Das thermoplastische Polyurethan ist bevorzugt ein Blockcopolymer, das ein Monomer A

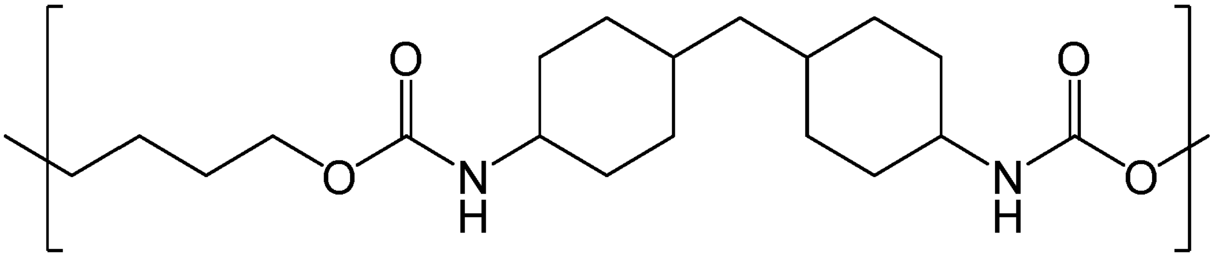

A

und ein Monomer B aufweist:

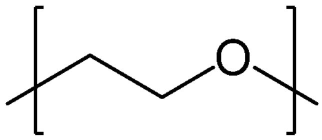

B

Das Monomer ist dabei jeweils von dem Bereich gebildet, der sich von der linken Klammer bis zu der rechten Klammer erstreckt. In dem Blockcopolymer kann an der linken Seite des Monomers A ein Sauerstoffatom angebunden sein oder es kann dort zum Terminieren des Blockcopolymers eine Hydroxylgruppe angebunden sein. An der rechten Seite des Monomers A kann ein Kohlenstoffatom angebunden sein oder es kann dort zum Terminieren des Blockcopolymers ein Wasserstoffatom angebunden sein. An der linken Seite des Monomers B kann ein Sauerstoffatom angebunden sein oder es kann dort zum Terminieren des Blockcopolymers eine Hydroxylgruppe angebunden sein. An der rechten Seite des Monomers B kann ein Kohlenstoffatom angebunden sein oder es kann dort zum Terminieren des Blockcopolymers ein Wasserstoffatom angebunden sein. Das Blockcopolymer kann im Wesentlichen aus Blöcken des Monomers A und Blöcken des Monomers B und Endgruppen zum Terminieren des Blockcopolymers bestehen. Bei den Endgruppen kann es sich um die vorgenannten Hydroxylgruppen und/oder die vorgenannten Wasserstoffatome handeln.

Es ist bevorzugt, dass das Massenverhältnis aus dem Monomer B zu dem Monomer A von 20 bis 100 beträgt, insbesondere von 30 bis 90.

Es ist bevorzugt, dass die zahlenmittlere molare Masse $\overline{M}$ des Blockcopolymers von $50*10^3$ g/mol bis $180*10^3$ g/mol beträgt, insbesondere von $80*10^3$ g/mol bis $150*10^3$ g/mol. Für die zahlenmittlere molare Masse $\overline{M}$ gilt: $\overline{M} = \frac{\sum_i^n Mi}{n}$, wobei *n* die Anzahl der Polymerketten des Blockcopolymers ist und $M_i$ die molare Masse der Polymerkette *i* ist.

Das Blockcopolymer ist kommerziell unter dem Markennamen Tecophilic® der Firma Lubrizol erwerblich. Als Beispiel hierfür kommen Tecophilic® TG-500 und/oder Tecophilic® TG-2000 in Frage. Das Massenverhältnis aus dem Monomer B zu dem Monomer A beträgt bei Tecophilic® TG-500 circa 40 und bei Tecophilic® TG-2000 circa 82. Die zahlenmittlere molare Masse $\overline{M}$ des Blockcopolymers beträgt bei Tecophilic® TG-500 circa $1,4*10^5$ g/mol und bei Tecophilic® TG-2000 circa $8*10^4$ g/mol.

Das Hydrogel kann beispielsweise auch ein Polymer aufweisen, das in weichen Kontaktlinsen verwendet wird. Als Beispiele hierfür kommen Hydroxyethylmethacrylate, Methylmethacrylate, Vinylpyrrolidone und/oder Silikonhydrogele in Frage. Das Hydrogel kann ein smartes Hydrogel sein. Insbesondere kann das smarte Hydrogel ionenstärkeresponsiv und/oder thermoresponsiv sein. Ein Beispiel für ein smartes Hydrogel, was sowohl ionenstärkeresponsiv als auch thermoresponsiv ist, ist das vorgenannte Tecophilic®. Ein anderes Beispiel für ein smartes Hydrogel, das thermoresponsiv ist, ist ein Polymer auf Basis von N-Isopropylacrylamid-Copolymeren.

Das Hydrogel ist ein thermoplastisches Elastomer. Das thermoplastische Elastomer lässt sich im Gegensatz zu anderen Elastomeren zu einer Folie extrudieren und danach kann aus der Folie das Diaphragma ausgestanzt werden. Im Gegensatz zu herkömmlichen Thermoplasten behält das thermoplastische Elastomer bei Raumtemperatur die elastischen Eigenschaften bei. Ein Beispiel für das thermoplastische Elastomer ist das Blockcopolymer.

Es ist bevorzugt, dass das Hydrogel ein smartes Hydrogel ist, d.h. ein stimuli-responsives Hydrogel. Smarte Hydrogele zeichnen sich dadurch aus, dass sie mit ausgeprägten Volumenänderungen auf bestimmte Umgebungsbedingungen reagieren. Es ist besonders bevorzugt, dass das smarte Hydrogel ionenstärkeresponsiv und/oder thermoresponsiv ist. In dem Fall, dass das smarte Hydrogel ionenstärkeresponsiv ist, quillt das smarte Hydrogel umso mehr auf, je geringer die Salzkonzentration bzw. die Leitfähigkeit des Messfluides ist. Ein Beispiel für ein solches ionenstärkeresponsives smartes Hydrogel ist das vorgenannte Blockcopolymer. Die niedrige Salzkonzentration in dem Messfluid führt dazu, dass mehr Ionen aus dem ersten elektrisch leitfähigen Fluid via das nun stärker gequollene Diaphragma in das Messfluid diffundieren können, was ein abnehmendes Diffusionspotential zwischen dem ersten elektrisch leitfähigen Fluid und dem Messfluid und damit eine höhere Messgenauigkeit verursacht. Die Einstabmesskette mit dem ionenstärkeresponsiven smarten Hydrogel eignet sich daher, um Reinstwasser zu vermessen. In dem Fall, dass das smarte Hydrogel thermoresponsiv ist, kann es so beschaffen sein, dass es mit zunehmender Temperatur schrumpft. Ein Beispiel für ein solches thermoresponsives smartes Hydrogel ist das vorgenannte Blockcopolymer. Das Schrumpfen des smarten Hydrogels führt dazu, dass das smarte Hydrogel weniger zu Verschmutzungen neigt und den Ausfluss der Ionen aus dem ersten elektrisch leitfähigen Fluid verringert, wodurch die Lebensdauer der Einstabmesskette auch bei erhöhten Temperaturen lang ist. Ein anderes Beispiel für ein smartes Hydrogel, das thermoresponsiv ist, ist ein Polymer auf Basis von N-Isopropylacrylamid-Copolymeren.

Es ist bevorzugt, dass die Einstabmesskette einen Referenzraum, in dem das erste elektrisch leitfähige Fluid angeordnet ist, und eine Öffnung aufweist, in der das Diaphragma angeordnet ist und die von dem Diaphragma abgedichtet ist. Die Öffnung lässt sich mit dem Diaphragma besonders einfach und besonders dicht abdichten, indem das Hydrogel zuerst in seinem trockenen Zustand in die Öffnung eingebracht wird. Nach Kontakt mit dem ersten elektrisch leitfähigen Fluid quillt das Hydrogel auf und dichtet somit die Öffnung ab.

Die Einstabmesskette weist bevorzugt ein Außenrohr und ein Innenrohr auf, das innerhalb des Außenrohrs angeordnet ist, wobei der Referenzraum zwischen dem Außenrohr und dem Innenrohr angeordnet ist und die Öffnung ein ringförmiger Spalt zwischen dem Außenrohr und dem Innenrohr ist. Das Hydrogel lässt sich ohne Probleme zu einem Ring formen, beispielsweise durch Schneiden und/oder Stanzen, so dass mit dem Hydrogel auch der ringförmige Spalt abgedichtet werden kann.

Es ist bevorzugt, dass die Einstabmesskette einen für das Messfluid durchlässigen Stöpsel aufweist, der in der Öffnung angeordnet ist und das Diaphragma abstützt. Damit der Stöpsel für das Messfluid durchlässig ist, kann er beispielsweise Durchgangslöcher aufweisen, eine Nut aufweisen und/oder porös sein. Der Stöpsel kann auf der dem Referenzraum zugewandten und/oder der dem Referenzraum abgewandten Seite des Diaphragmas angeordnet sein. Durch das Vorsehen des Stöpsels kann unterbunden werden, dass das Diaphragma aus der Öffnung gelangt, insbesondere wenn das erste elektrisch leitfähige Fluid in den Referenzraum eingebracht wird. Zudem ist es möglich, mittels des Stöpsels den Ausfluss des ersten elektrisch leitfähigen Fluides zu steuern, beispielsweise durch Wählen des Durchmessers und/oder der Anzahl der Durchgangslöcher, durch Wählen der Größe der Nut, durch Wählen der Porosität des Stöpsels und/oder durch Wählen der Abmessungen des Stöpsels.

Es ist bevorzugt, dass das Innenrohr ein erstes Innenrohrlängsende aufweist, das geschlossen ausgebildet ist und eine Glasmembran aufweist, wobei in dem Innenrohr die Arbeitselektrode und ein zweites elektrisch leitfähiges Fluid angeordnet sind, das die Glasmembran und die Arbeitselektrode kontaktiert, so dass die Glasmembran via das zweite elektrisch leitfähige Fluid elektrisch leitfähig mit der Arbeitselektrode verbunden ist.

Die Einstabmesskette ist bevorzugt eine pH-Einstabmesskette und/oder ein Redox-Sensor. Besonders bevorzugt ist die pH-Einstabmesskette eine pH-Glaselektrode.

Bei dem ersten elektrisch leitfähigen Fluid kann es sich um wässrige KCl-Lösung handeln, beispielsweise um eine wässrige 3 M KCl-Lösung. Alternativ kann es sich bei dem ersten elektrisch leitfähigen Fluid um eine hochviskose Flüssigkeit handeln. Beispielsweise kann dazu die wässrige KCl-Lösung, insbesondere die wässrige 3 M KCl-Lösung, mit einem Verdicker, insbesondere Hydroxyethylcellulose, verdickt werden. Die Hydroxyethylcellulose ist beispielsweise unter dem Handelsnamen Natrosol käuflich erwerbbar. Alternativ kann das erste elektrisch leitfähige Fluid stark verfestigt sein. Dazu wird eine Monomermischung in die Einstabmesskette eingebracht und dort zu einem Polymer polymerisiert. Bei dem Polymer kann es sich beispielsweise um ein Polymer handeln, dass durch Polymerisation von N-Acryloylaminoethoxyethanol oder durch Copolymerisation von N-Acryloylaminoethoxyethanol mit einem Hydroxyalkylmethacrylat erhalten wird, wie es beispielsweise in WO 2005/073704 A1 beschrieben ist.

Die Dicke des Diaphragmas beträgt bevorzugt von 0,1 mm bis 1,0 mm, insbesondere von 0,35 mm bis 0,7 mm. Es wurde gefunden, dass mit diesen Dicken der Ausfluss von KCl gering ist, jedoch der Ladungsaustausch zwischen dem ersten elektrisch leitfähigen Fluid und dem Messfluid derart hoch ist, dass fehlerfreie Messungen mit der Einstabmesskette durchgeführt werden können.

Das erfindungsgemäße Verfahren zum Herstellen der Einstabmesskette wird durch Anspruch 13 definiert. Durch das erfindungsgemäße Verfahren lässt sich die Öffnung einfach und besonders dicht abdichten. Die durch das Verfahren hergestellte Einstabmesskette hat eine lange Lebensdauer, innerhalb derer die Einstabmesskette fehlerfreie Messungen durchführen kann. Das Anordnen der Arbeitselektrode innerhalb des Innenrohrs und der Referenzelektrode innerhalb des Außenrohrs kann sowohl vor dem Einbringen des Hydrogels, als auch nach dem Einbringen des Hydrogels erfolgen.

Es ist bevorzugt, dass das Außenrohr ein erstes Außenrohrlängsende, in dessen Bereich das Diaphragma angeordnet wird, und ein zweites Außenrohrlängsende aufweist, via das das erste elektrisch leitfähige Fluid in den Referenzraum eingebracht wird.

Alternativ ist bevorzugt, dass das Außenrohr ein erstes Außenrohrlängsende, in dessen Bereich das Diaphragma angeordnet wird, und ein zweites Außenrohrlängsende aufweist, wobei das Verfahren den Schritt aufweist: - Abdichten des zweiten Außenrohrlängsendes vor dem Einbringen des ersten elektrisch leitfähigen Fluides in den Referenzraum; zum Einbringen des ersten elektrisch leitfähigen Fluides in den Referenzraum wird das erste Außenrohrlängsende in das erste elektrisch leitfähige Fluid getaucht, die Einstabmesskette wird zusammen mit dem ersten elektrisch leitfähigen Fluid in einen Vakuumbehälter eingebracht, der Vakuumbehälter wird evakuiert und anschließend belüftet, so dass das erste elektrisch leitfähige Fluid via die Öffnung in den Referenzraum eintritt. Dabei handelt es sich um ein einfaches Verfahren zum Befüllen des Referenzraumes. Zudem ist möglich, eine Vielzahl der Einstabmessketten gleichzeitig in das erste elektrisch leitfähige Fluid zu tauchen und in den Vakuumbehälter zum Evakuieren und Belüften des Vakuumbehälters einzubringen. Dadurch kann das erste elektrisch leitfähige Fluid gleichzeitig in die Vielzahl der Einstabmessketten eingebracht werden, wodurch das Verfahren kostengünstig ist. Es ist besonders bevorzugt, dass der Vakuumbehälter bis zu einem Druck von 50 mbar bis 100 mbar, insbesondere 80 mbar, evakuiert wird.

Es ist bevorzugt, dass das Innenrohr ein erstes Innenrohrlängsende, das geschlossen ausgebildet ist, und eine Glasmembran aufweist, die im Bereich des ersten Innenrohrlängsendes angeordnet wird, wobei in dem Innenrohr die Arbeitselektrode und ein zweites elektrisch leitfähiges Fluid angeordnet werden, das die Glasmembran und die Arbeitselektrode kontaktiert, so dass die Glasmembran via das zweite elektrisch leitfähige Fluid elektrisch leitfähig mit der Arbeitselektrode verbunden ist. Besonders bevorzugt wird das erste Innenrohrlängsende im Bereich des ersten Außenrohrlängsendes angeordnet.

Es ist bevorzugt, dass bei dem Einbringen des Hydrogels in seinem trockenen Zustand in die Öffnung das Hydrogel kleiner als die Öffnung gewählt wird und nach dem Einbringen des ersten elektrisch leitfähigen Fluides in den Referenzraum das gebildete Diaphragma unter einer Druckspannung steht. Dadurch kann die Öffnung besonders dicht abgedichtet werden. Um zu erreichen, dass die Druckspannung entsteht, kann der Fachmann in einem Vorversuch verschieden große Hydrogele, die sich in ihrem trockenen Zustand befinden und kleiner als die Öffnung sind, mit dem ersten elektrisch leitfähigen Fluid kontaktieren und aufquellen lassen. Nach dem Aufquellen wird die Größe der Hydrogele in ihrem aufgequollenen Zustand bestimmt und es kommen für das Diaphragma nur solche der verschieden großen Hydrogele in Frage, die in ihrem aufgequollenen Zustand größer als die Öffnung sind. Es können solche der verschieden großen Hydrogele ausgewählt werden, die in ihrem aufgequollen Zustand von 10 % bis 100 % größer als die Öffnung sind, insbesondere von 30 % bis 50 % größer als die Öffnung. Der Quellgrad Q des Hydrogels kann von 115 % bis 1000 % betragen, insbesondere von 150 % bis 800 %, insbesondere von 180 % bis 350 %. Der Quellgrad Q ist dabei definiert als $Q = (V_Q - V_T)/V_T$, wobei $V_T$ das Volumen des Hydrogels in seinem trockenen Zustand ist und $V_Q$ das Volumen des Hydrogels in seinem mit dem ersten elektrisch leitfähigen Fluid aufgequollenen Zustand ist.

Im Folgenden wird anhand der beigefügten schematischen Zeichnungen die Erfindung näher erläutert.

Figur 1 zeigt einen Längsschnitt durch eine Einstabmesskette.

Figur 2 zeigt eine Auftragung, bei der ein Ausfluss von Kalium für verschiedene Einstabmessketten aufgetragen ist.

Figur 3 zeigt eine Auftragung, bei der ein Ausfluss von Kalium für verschiedene Einstabmessketten und bei zwei verschiedenen Temperaturen aufgetragen ist.

Bei der Einstabmesskette 1 kann es sich um eine pH-Einstabmesskette und/oder um einen Redox-Sensor handeln. Bei der pH-Einstabmesskette kann es sich um eine pH-Glaselektrode handeln.

Wie es aus Figur 1 ersichtlich ist, weist die Einstabmesskette 1 zum Messen eines Messfluides eine Arbeitselektrode 2, eine Referenzelektrode 3, ein Diaphragma 10 und ein erstes elektrisch leitfähiges Fluid 6 auf. Das erste elektrisch leitfähige Fluid steht in Kontakt mit der Referenzelektrode 3 und dem Diaphragma 10, so dass das Diaphragma 10 via das erste elektrisch leitfähige Fluid 6 elektrisch leitfähig mit der Referenzelektrode 2 verbunden ist. Um eine Messung in einem Betrieb der Einstabmesskette 1 durchzuführen, ist die dem ersten elektrisch leitfähigen Fluid 6 abgewandte Seite des Diaphragmas 10 mit dem Messfluid zu kontaktieren. Das Diaphragma 10 zeichnet sich dadurch aus, dass es eine Durchmischung des ersten elektrisch leitfähigen Fluides 6 und des Messfluides verhindert, jedoch einen

Ladungstransport zwischen dem ersten elektrisch leitfähigen Fluid 6 und dem Messfluid ermöglicht. Zudem weist die Einstabmesskette 1 eine Glasmembran 9 und ein zweites elektrisch leitfähiges Fluid 7 auf, das die Glasmembran 9 elektrisch leitfähig mit der Arbeitselektrode 2 verbindet. Das erste elektrisch leitfähige Fluid 6 und das zweite elektrisch leitfähige Fluid 7 sind elektrisch voneinander isoliert. Zum Messen des Messfluides wird das Messfluid auch mit der dem zweiten elektrisch leitfähige Fluid 8 abgewandten Seite der Glasmembran 9 kontaktiert und es wird zwischen der Arbeitselektrode 2 und der Referenzelektrode 3 eine elektrische Spannung gemessen.

Erfindungsgemäß weist das Diaphragma 10 ein Hydrogel auf. Das Diaphragma 10 kann auch im Wesentlichen aus dem Hydrogel bestehen.

Das Hydrogel kann ein thermoplastisches Polyurethan aufweisen. Das thermoplastische Polyurethan kann ein Blockcopolymer sein, das ein Monomer A

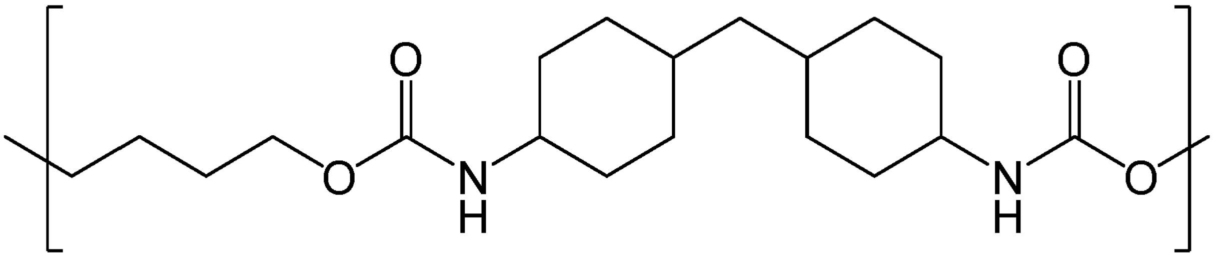

A

und ein Monomer B aufweist:

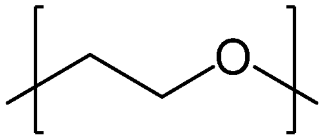

B

Das Monomer ist dabei jeweils von dem Bereich gebildet, der sich von der linken Klammer bis zu der rechten Klammer erstreckt. In dem Blockcopolymer kann an der linken Seite des Monomers A ein Sauerstoffatom angebunden sein oder es kann dort zum Terminieren des Blockcopolymers eine Hydroxylgruppe angebunden sein. An der rechten Seite des Monomers A kann ein Kohlenstoffatom angebunden sein oder es kann dort zum Terminieren des Blockcopolymers ein Wasserstoffatom angebunden sein. An der linken Seite des Monomers B kann ein Sauerstoffatom angebunden sein oder es kann dort zum Terminieren des Blockcopolymers eine Hydroxylgruppe angebunden sein. An der rechten Seite des Monomers B kann ein Kohlenstoffatom angebunden sein oder es kann dort zum Terminieren des Blockcopolymers ein Wasserstoffatom angebunden sein. Das Blockcopolymer kann im Wesentlichen aus Blöcken des Monomers A und Blöcken des Monomers B und Endgruppen zum Terminieren des Blockcopolymers bestehen. Bei den Endgruppen kann es sich um die vorgenannten Hydroxylgruppen und/oder die vorgenannten Wasserstoffatome handeln.

Das Massenverhältnis aus dem Monomer B zu dem Monomer A kann von 20 bis 100 betragen, insbesondere von 30 bis 90.

Die zahlenmittlere molare Masse $\overline{M}$ des Blockcopolymers kann von $50 \cdot 10^3$ g/mol bis $180 \cdot 10^3$ g/mol betragen, insbesondere von $80 \cdot 10^3$ g/mol bis $150 \cdot 10^3$ g/mol. Für die zahlenmittlere molare Masse $\overline{M}$ gilt: $\overline{M} = \frac{\sum_i^n Mi}{n}$, wobei *n* die Anzahl der Polymerketten des Blockcopolymers ist und $M_i$ die molare Masse der Polymerkette *i* ist.

Das Blockcopolymer ist kommerziell unter dem Markennamen Tecophilic® der Firma Lubrizol erwerblich. Als Beispiel hierfür kommen Tecophilic® TG-500 und/oder Tecophilic® TG-2000 in Frage. Das Massenverhältnis aus dem Monomer B zu dem Monomer A beträgt bei Tecophilic® TG-500 circa 40 und bei Tecophilic® TG-2000 circa 82. Die zahlenmittlere molare Masse $\overline{M}$ des Blockcopolymers beträgt bei Tecophilic® TG-500 circa $1,4 \cdot 10^5$ g/mol und bei Tecophilic® TG-2000 circa $8 \cdot 10^4$ g/mol.

Das Hydrogel kann beispielsweise auch ein Polymer aufweisen, das in weichen Kontaktlinsen verwendet wird. Als Beispiele hierfür kommen Hydroxyethylmethacrylate, und/oder Vinylpyrrolidone und/oder Silikonhydrogele in Frage.

Das Hydrogel ist ein thermoplastisches Elastomer. Das Hydrogel kann ein smartes Hydrogel sein. Insbesondere kann das smarte Hydrogel ionenstärkeresponsiv und/oder thermoresponsiv sein. In dem Fall, dass das smarte Hydrogel thermoresponsiv ist, kann es so beschaffen sein, dass es bei höherer Temperatur mehr aufquillt und/oder schrumpft. Es kann eine Übergangstemperatur geben, in dem das Hydrogel das Verhalten zwischen Aufquellen und Schrumpfen ändert. Ein Beispiel für ein smartes Hydrogel, was sowohl ionenstärkeresponsiv als auch thermoresponsiv ist, ist das vorgenannte Tecophilic®. Ein anderes Beispiel für ein smartes Hydrogel, das thermoresponsiv ist, ist ein Polymer auf Basis von N-Isopropylacrylamid-Copolymeren.

Die Dicke des Diaphragmas 10 kann von 0,1 mm bis 1,0 mm betragen, insbesondere von 0,35 mm bis 0,7 mm.

Wie es aus Figur 1 ersichtlich ist, weist die Einstabmesskette 1 ein Außenrohr 4 und ein Innenrohr 5 auf, das innerhalb des Außenrohrs 5 angeordnet ist. Zwischen dem Außenrohr 4 und dem Innenrohr 5 ist ein Referenzraum 20 angeordnet, in dem das erste elektrisch leitfähige Fluid 6 angeordnet ist. Die Einstabmesskette 1 weist eine Öffnung in Form eines zwischen dem Außenrohr 4 und dem Innenrohr 5 angeordneten ringförmigen Spaltes auf. Das Diaphragma 10 ist in der Öffnung angeordnet und dichtet die Öffnung ab.

Figur 1 zeigt, dass das Außenrohr 4 ein erstes Außenrohrlängsende 15 aufweist und das Innenrohr 5 ein erstes Innenrohrlängsende 17 aufweist, wobei das erste Innenrohrlängsende 17 im Bereich des ersten Außenrohrlängsendes 15 angeordnet ist. Das Diaphragma 10 ist im Bereich des ersten Außenrohrlängsendes 15 angeordnet und die Glasmembran 9 ist im Bereich des ersten Innenrohrlängsendes 17 angeordnet.

Das Innenrohr 5 weist ein zweites Innenrohrlängsende 16 auf, das dem ersten Innenrohrlängsende 17 abgewandt angeordnet ist. Zwischen dem ersten Innenrohrlängsende 17 und dem zweiten Innenrohrlängsende 16 ist ein innerhalb des Innenrohrs 5 ein Innenrohrraum 19 angeordnet, in dem das zweite elektrisch leitfähige Fluid 7 angeordnet ist. Zudem kann das Innenrohr 5 an seinem ersten Innenrohrlängsende 17 ein Vorratsgefäß 8 aufweisen, dessen Inneres ein Teil des Innenrohrraums 19 bildet und einen größeren Innenquerschnitt als das restliche Innenrohr 5 hat, so dass eine größere Menge an dem zweiten elektrisch leitfähigen Fluid 7 als ohne das Vorratsgefäß 8 in das Innenrohr 5 einbringbar ist. Die Dicke des Diaphragmas 10 ist die Erstreckung des Diaphragmas 10 in Richtung von dem ersten Innenohrlängsende 17 zu dem zweiten Innenrohrlängsende 16.

In dem Fall, dass es sich bei der Einstabmesskette 1 gemäß Figur 1 um die pH-Glaselektrode handelt, kann das zweite elektrisch leitfähige Fluid 7 ein Innenpuffer sein. Der Innenpuffer kann eine wässrige KCl-Lösung aufweisen. Als Puffer kommen beispielsweise ein Acetatpuffer und/oder ein Phosphatpuffer in Frage. Das elektrisch leitfähige Fluid 6 kann eine wässrige Lösung aufweisen, insbesondere eine wässrige KCl-Lösung. Es ist denkbar, dass die KCl-Konzentration des ersten elektrisch leitfähigen Fluides 3 mol/l beträgt. Das erste elektrisch leitfähige Fluid 6 kann entweder aus der wässrigen KCl-Lösung bestehen, die wässrige KCl-Lösung kann mit einem Verdicker, insbesondere Hydroxyethylcellulose, verdickt sein, oder die wässrige KCl-Lösung kann mit einer polymerisierten Monomermischung gemischt sein. Bei der polymerisierten Monomermischung kann es sich beispielsweise um ein Polymer handeln, dass durch Polymerisation von N-Acryloylaminoethoxyethanol oder durch Copolymerisation von N-Acryloylaminoethoxyethanol mit einem Hydroxyalkylmethacrylat erhalten wird, wie es beispielsweise in WO 2005/073704 A1 beschrieben ist.

Bei der Arbeitselektrode 2 und der Referenzelektrode 3 kann es sich jeweils um eine Silber-Silberchlorid Elektrode handeln. Damit hätte die pH-Glaselektrode folgende elektrochemische Reihe: Ag(s) | AgCl(s) | $K^+$(aq)$Cl^-$(aq) ‖ Glasmembran 9 ‖ Messfluid ‖ Diaphragma 10 ‖ $K^+$(aq)$Cl^-$(aq) | AgCl(s) | Ag(s). Zwischen den beiden Ag(s) Elementen kann nun eine elektrische Spannung gemessen werden. Anhand der gemessenen elektrischen Spannung kann auf den pH-Wert des Messfluides zurückgeschlossen werden.

Die Einstabmesskette 1 kann einen Stöpsel 11 aufweisen, der in dem ringförmigen Spalt auf der dem Referenzraum 20 abgewandten Seite des Diaphragmas 10 angeordnet ist und das Diaphragma 10 abstützt. Der Stöpsel 11 ist durchlässig für das Messfluid. Dazu kann der Stöpsel 11 ein oder mehrere Stöpseldurchgangslöcher aufweisen, eine Nut aufweisen und/oder der Stöpsel 11 kann porös sein.

Wie es aus Figur 1 ersichtlich ist, kann die Einstabmesskette 1 eine Dichtung 21 aufweisen, die in das Innenrohr 5 eingebracht ist und den Innenrohrraum 19 abdichtet. Damit ist das zweite elektrisch leitfähige Fluid zwischen dem ersten Innenrohrlängsende 17 und der Dichtung 21 angeordnet. Bei der Dichtung 21 kann es sich um einen Kleber, insbesondere einen Silikonkleber, handeln.

Zudem kann die Einstabmesskette 1 einen Dichtring 14 aufweisen, der in den ringförmigen Spalt zwischen dem Außenrohr 4 und dem Innenrohr 5 im Bereich eines zweiten Außenrohrlängsendes 18 angeordnet ist, das dem ersten Außenrohrlängsende 15 abgewandt angeordnet ist, und den Referenzraum 20 abdichtet. Damit ist das erste elektrisch leitfähige Fluid 6 zwischen dem Diaphragma 10 und dem Dichtring 14 angeordnet.

Wie es aus Figur 1 ersichtlich ist, kann die Einstabmesskette 1 ein Kopfteil 12 aufweisen, das das Außenrohr 4 an seinem zweiten Außenrohrlängsende 18 umschließt. Zudem steht das Kopfteil 12 von dem zweiten Außenrohrlängsende 18 ab. Das Kopfteil 12 weist in seinem Inneren einen Hohlraum auf, der mit einer Vergussmasse 13 gefüllt ist. Die Vergussmasse 13 kann zusätzlich zu dem Dichtring 14 und der Dichtung 21 ein weiteres Mal abdichten. Bei der Vergussmasse 13 kann es sich um einen Silikonkleber handeln.

Ein Verfahren zum Herstellen der Einstabmesskette 1 kann wie folgt durchgeführt werden:

- Bereitstellen des Außenrohrs 4 und des Innenrohrs 5 sowie Anordnen des Innenrohrs 5 innerhalb des Außenrohrs 4, wobei ein Referenzraum 20 zwischen dem Außenrohr 4 und dem Innenrohr 5 angeordnet ist und das Außenrohr 4 und das Innenrohr 5 eine Öffnung begrenzen, die zwischen dem Außenrohr 4 und dem Innenrohr 5 angeordnet ist und die Form eines ringförmigen Spalts hat;

- Anordnen der Arbeitselektrode 2 innerhalb des Innenrohrs 5 und der Referenzelektrode 3 innerhalb des Referenzraumes 20;

- Anordnen des zweiten elektrisch leitfähigen Fluides 7 in dem Innenrohr 5, wobei das zweite elektrisch leitfähige Fluid 7 die Glasmembran 9 und die Arbeitselektrode 2 kontaktiert, so dass die Glasmembran 9 via das zweite elektrisch leitfähige Fluid 7 elektrisch leitfähig mit der Arbeitselektrode 2 verbunden ist;

- Einbringen des Hydrogels in seinem trockenen Zustand in die Öffnung, wodurch der Referenzraum 20 von dem Hydrogel begrenzt wird;

- Einbringen des ersten elektrisch leitfähigen Fluides 6 in den Referenzraum 20 und dadurch Kontaktieren des Hydrogels mit dem ersten elektrisch leitfähigen Fluid 6, wodurch das Hydrogel aufquillt und somit das Diaphragma 10 bildet und die Öffnung abdichtet, sowie Kontaktieren der Referenzelektrode 3 mit dem ersten elektrisch leitfähigen Fluid 6, so dass das Diaphragma 10 via das erste elektrisch leitfähige Fluid 6 elektrisch leitfähig mit der Referenzelektrode 3 verbunden ist.

Um zu vermeiden, dass das zweite elektrisch leitfähige Fluid 7 aus dem Innenrohr 5 gelangt, kann das Verfahren den Schritt aufweisen:

- Abdichten des zweiten Innenrohrlängsendes 16 mittels der Dichtung 21 und/oder mittels des Kopfteils 12 und der Vergussmasse 13.

Zum Einbringen des ersten elektrisch leitfähigen Fluides in den Referenzraum 20 kann gemäß einer ersten Alternative wie folgt vorgegangen werden:

- Einbringen des ersten elektrisch leitfähigen Fluides 6 in den Referenzraum 20 via das zweite Außenrohrlängsende 18.

Um zu vermeiden, dass das erste elektrisch leitfähige Fluid 6 via das zweite Außenrohrlängsende 18 aus dem Referenzraum 20 gelangt, kann das Verfahren nach dem Einbringen des ersten elektrisch leitfähigen Fluides in den Referenzraum 20 den Schritt aufweisen:

- Abdichten des zweiten Außenrohrlängsendes 18 mittels des Dichtrings 14 und/oder mittels des Kopfteils 12 und der Vergussmasse 13.

Zum Einbringen des ersten elektrisch leitfähigen Fluides in den Referenzraum 20 kann gemäß einer zweiten Alternative wie folgt vorgegangen werden:

- Abdichten des zweiten Außenrohrlängsendes 18 vor dem Einbringen des ersten elektrisch leitfähigen Fluides 6 in den Referenzraum 20;

zum Einbringen des ersten elektrisch leitfähigen Fluides 6 in den Referenzraum 20 wird das erste Außenrohrlängsende 15 in das erste elektrisch leitfähige Fluid 6 getaucht, die Einstabmesskette 1 wird zusammen mit dem ersten elektrisch leitfähigen Fluid 6 in einen Vakuumbehälter eingebracht, der Vakuumbehälter wird evakuiert und anschließend belüftet, so dass das erste elektrisch leitfähige Fluid 6 via die Öffnung in den Referenzraum 20 eintritt. Das Abdichten des zweiten Außenrohrlängsendes 18 kann mittels des Dichtrings 14 und/oder mittels des Kopfteils 12 und der Vergussmasse 13 erfolgen. Der Vakuumbehälter kann bis zu einem Druck von 50 mbar bis 100 mbar, insbesondere 80 mbar, evakuiert werden.

Zum Einbringen des Hydrogels in seinem trockenen Zustand in die Öffnung kann wie folgt vorgegangen werden: In einer ersten Alternative wird zuerst das Innenrohr 5 innerhalb des Außenrohrs 4 angeordnet und dann das Hydrogel in die Öffnung eingebracht. In einer zweiten Alternative wird zuerst das Hydrogel um das Innenrohr 5 angeordnet und anschließend das Innenrohr 5 zusammen mit dem Hydrogel innerhalb des Außenrohrs 4 angeordnet. In einer dritten Alternative wird zuerst das Hydrogel im Außenrohr 4 angeordnet und anschließend das Innenrohr 4 in das Außenrohr

eingebracht.

Bei dem Einbringen des Hydrogels in seinem trockenen Zustand in die Öffnung kann das Hydrogel kleiner als die Öffnung sein und nach dem Einbringen des ersten elektrisch leitfähigen Fluides in den Referenzraum kann das gebildete Diaphragma unter einer Druckspannung stehen. Um zu erreichen, dass die Druckspannung entsteht, kann der Fachmann in einem Vorversuch verschieden große Hydrogele, die sich in ihrem trockenen Zustand befinden und kleiner als die Öffnung sind, mit dem ersten elektrisch leitfähigen Fluid kontaktieren und aufquellen lassen. Nach dem Aufquellen wird die Größe der Hydrogele in ihrem aufgequollenen Zustand bestimmt und es kommen für das Diaphragma nur solche der verschieden großen Hydrogele in Frage, die in ihrem aufgequollenen Zustand größer als die Öffnung ist. Es können solche der verschieden großen Hydrogele ausgewählt werden, die in ihrem gequollen Zustand von 10 % bis 100 % größer als die Öffnung sind, insbesondere von 30 % bis 50 % größer als die Öffnung. Der Quellgrad Q des Hydrogels kann von 115 % bis 1000 % betragen, insbesondere von 150 % bis 800 %, insbesondere von 180 % bis 350 %. Der Quellgrad *Q* ist dabei definiert als $Q = (V_Q - V_T)/V_T$, wobei $V_T$ das Volumen des Hydrogels in seinem trockenen Zustand ist und $V_Q$ das Volumen des Hydrogels in seinem mit dem ersten elektrisch leitfähigen Fluid aufgequollenen Zustand ist.

Es wurden 16 Einstabmessketten 1 aufgebaut und hinsichtlich ihres Diffusionspotentials, ihres Referenzwiderstandes und ihres Ausflusses untersucht. Die Ergebnisse hinsichtlich des Diffusionspotentials und des Referenzwiderstandes sind in Tabellen 1 bis 3 zusammengefasst. Die Ergebnisse hinsichtlich des Ausflusses sind in Tabelle 4 zusammengefasst. Zwölf der Einstabmessketten (in den Tabellen bezeichnet mit 0b, 0c, 1a, 1b, 1c, 3a, 3b, 3c, 4a, 4b, 4c, 5a) sind sogenannte T-Typ Einstabmessketten 1 und vier der Einstabmessketten (in den Tabellen bezeichnet mit 2a, 2b, 2c, 6a) sind sogenannte P-Typ Einstabmessketten 1. Bei den T-Typ Einstabmessketten 1 hat der Referenzraum 20 ein Volumen von ca. 3,5 ml, bei den P-Typ Einstabmessketten hat der Referenzraum 20 ein Volumen von ca. 7 ml. Wie aus Tabellen 1 bis 3 ersichtlich ist, wurden Diaphragmen mit der Dicke 0,35 mm, 2 x 0,35 mm = 0,7 mm (d.h. es wurden zwei Schichten des Hydrogels übereinander gelegt), 0,50 mm und 0,55 mm eingesetzt. Für das Hydrogel wurden Tecophilic® TG-500 und Tecophilic® TG-2000 verwendet. Für das erste elektrisch leitfähige Fluid 6 wurde eine Mischung eingesetzt, die eine wässrige KCl-Lösung, Glyzerin und Hydroxyethylcellulose aufweist. Die Einstabmessketten 1 gemäß Tabelle 1 weisen den Stöpsel 11 auf. Alle 16 Einstabmessketten konnten problemlos in dem Vakuumbehälter mit dem ersten elektrisch leitfähigen Fluid 6 gefüllt werden.

Das Diffusionspotential $U_{DIFF}$ wurde bestimmt, indem die Einstabmesskette 1 gegen eine externe Referenzelektrode vermessen wurde. Der Referenzwiderstand $R_{REF}$ wurde bestimmt, indem der Widerstand zwischen der Referenzelektrode 3 und dem Messfluid bestimmt wird. Die Messungen wurden mit einer 3 M KCl-Lösung, einer Pufferlösung mit dem pH-Wert 4, einer Pufferlösung mit dem pH-Wert 7 und einer Pufferlösung mit dem pH-Wert 10 als dem Messfluid durchgeführt. Das Diffusionspotential $U_{DIFF}$ und der Referenzwiderstand $R_{REF}$ wurden 1 Tag nach dem Abspülen (linker Messwert in der dritten bis fünften Spalte in Tabellen 1 bis 3) und 30 min danach (rechter Messwert in der dritten bis fünften Spalte in Tabellen 1 bis 3) bestimmt. Die Messungen wurden in Pufferlösungen wiederholt, die im Vergleich zu der Pufferlösung aus Tabelle 1 in einem Verhältnis 1:10 (siehe Tabelle 2) und in einem Verhältnis 1:100 (siehe Tabelle 3) verdünnt sind. Der Zusatz "unv." in Tabellen 2 und 3 deutet darauf hin, dass die KCl-Lösung nicht verdünnt wurde.

Die vierte Spalte in Tabellen 1 bis 3 gibt die maximale Spannungsdifferenz $\Delta U_{DIFF}$ der in den vier verschiedenen Lösungen gemessenen Diffusionspotentiale (siehe die jeweils zugehörige dritte Spalte in Tabellen 1 bis 3) an. Gute Elektroden haben maximal eine maximale Spannungsdifferenz $\Delta U_{DIFF}$ von 3 mV. Die maximale Spannungsdifferenz $\Delta U_{DIFF}$ von 3 mV führt zu einer hohen Messgenauigkeit der Einstabmesskette. Wie es aus Tabellen 1 bis 3 ersichtlich ist, erfüllen alle 16 Einstabmessketten dieses Kriterium nach einer Messdauer von 30 min. Zudem sollte der Referenzwiderstand $U_{REF}$ nicht höher als 50 kOhm sein, was gemäß Tabellen 1 bis 3 auch von allen Elektroden erfüllt wird. Dadurch, dass der Referenzwiderstand nicht höher als 50 kOhm ist, sind die Anforderungen an eine Messelektronik nicht sehr hoch, die eingerichtet ist, die Spannung zwischen der Arbeitselektrode und der Messelektrode zu messen. Zudem haben die Einstabmessketten 1 nach der Messdauer von 30 min nur ein geringes Diffusionspotential $U_{DIFF}$ mit einem Betrag von maximal 3 mV.

Um den Ausfluss von Kalium aus dem Referenzraum 20 zu bestimmen, wurde die Einstabmesskette 1 sieben Tage lang derart in entionisiertem Wasser gelagert, dass das Diaphragma 10 in Kontakt mit dem entionisierten Wasser stand. Anschließend wurde die Menge des Kaliums in dem entionisierten Wasser mittels Massenspektrometrie bestimmt (Spalte 3 in Tabelle 4, ICP-MS bedeutet dort induktiv gekoppeltes Plasma - Massenspektrometrie). Zudem wurde die Menge des Kaliums in dem entionisierten Wasser mittels einer Leitfähigkeitsmessung bestimmt (Spalte 4 in Tabelle 4, umger. üb. LF bedeutet dort umgerechnet über Leitfähigkeit), wobei die Leitfähigkeitsmessung anhand der Messdaten der Spalte 3 kalibriert wurde. In der dritten Spalte und der vierten Spalte in Tabelle 4 ist der Kaliumausfluss pro Tag angegeben. In Figur 2 ist der Kaliumausfluss in mg pro Tag aufgetragen gegen die jeweilige Einstabmesskette 1. T bedeutet T-Typ, P bedeutet P-Typ, TG500 bedeutet Tecophilic® TG-500, TG2000 bedeutet Tecophilic® TG-2000 und die darauffolgende Zahl bezeichnet die Dicke des Diaphragmas 10 in $10^{-2}$ mm. Der darauffolgende Buchstabe zählt die baugleichen Einstabmessketten 1 durch und ist identisch mit dem Buchstaben in der ersten Spalte der Tabellen 1 bis 4. Tabelle 4 und Figur 2 zeigen, dass nur zwei der Einstabmessketten 1 (T-TG500-35-B und P-TG500-35-C) einen Kaliumausfluss von

mehr als 0,5 mg pro Tag haben. Dies kann dadurch erklärt werden, dass das Diaphragma 10 beim Einbringen in die Öffnung versehentlich leicht beschädigt wurde. Zudem ist erkennbar, dass die Menge des Kaliumausflusses mit zunehmender Dicke des Diaphragmas 10 abnimmt.

Figur 3 zeigt den Kaliumausfluss von weiteren der Einstabmessketten 1, wobei die weiteren der Einstabmessketten 1 M-Typ Einstabmessketten 1 sind. Eine der M-Typ Einstabmessketten 1 ist eine herkömmliche Einstabmesskette, die ein poröses Keramikdiaphragma aufweist (in Figur 3 mit "Keramik" bezeichnet). In Figur 3 ist der Kaliumausfluss in mg pro Tag aufgetragen gegen die jeweilige Einstabmesskette 1. M bedeutet M-Typ, TG500 bedeutet Tecophilic® TG-500, TG2000 bedeutet Tecophilic® TG-2000 und die darauffolgende Zahl bezeichnet die Dicke des Diaphragmas 10 in $10^{-2}$ mm. Der darauffolgende Buchstabe zählt die baugleichen Einstabmessketten 1 durch. Die M-Typ Einstabmessketten 1 unterscheiden sich von den T-Typ Einstabmessketten 1 und P-Typ Einstabmessketten 1 darin, dass bei den M-Typ Einstabmessketten 1 der Außendurchmesser des Innenrohrs 5 und der Innendurchmesser des Außenrohrs 4 kürzer sind als bei den T-Typ Einstabmessketten 1 und P-Typ Einstabmessketten 1. Es wurde bei jeder der M-Typ Einstabmessketten 1 der Kaliumausfluss bei einer Temperatur des entionisierten Wassers von 21°C (linker Balken) und von 37°C (rechter Balken) bestimmt. Unter den Balken ist der jeweilige Kaliumausfluss angegeben, wobei die höhere Zahl der Kaliumausfluss bei 37°C ist. Figur 3 zeigt, dass der Kaliumausfluss bei den Tecophilic® Diaphragmen geringer als bei dem porösen Keramikdiaphragma ist.

Es konnte zudem gezeigt werden, dass sich der Referenzraum 20 mit einer 3 M KCl-Lösung innerhalb des Vakuumbehälters befüllen lässt. Es konnte auch gezeigt werden, dass innerhalb des Vakuumbehälters ein Festelektrolyt in den Referenzraum 20 eingebracht werden kann. Dazu wird eine Monomermischung in den Referenzraum 20 gefüllt, die anschließend zu dem Festelektrolyten polymerisiert wird. Bei dem Festelektrolyt kann es sich beispielsweise um ein Polymer handeln, dass durch Polymerisation von N-Acryloylaminoethoxyethanol oder durch Copolymerisation von N-Acryloylaminoethoxyethanol mit einem Hydroxyalkylmethacrylat erhalten wird, wie es beispielsweise in WO 2005/073704 A1 beschrieben ist.

Tabelle 1: Bestimmung des Diffusionspotentials und des Referenzwiderstands:

| **Sensor** | **Messfluid** | **$U_{DIFF}$/mV** n. 0 / ~30 | **$\Delta U_{DI}$FF/mV** n. 0 / ~30 | **$R_{REF}$/kOhm** n. 0 / ~30 |
|---|---|---|---|---|
| 0b. TAP-Sensor mit 0.35 mm TG-500 | 3 M KCl<br>Puffer pH 4<br>Puffer pH 7<br>Puffer pH 10 | -3 / -2<br>-3 / -2<br>-2 / -2<br>+1 / ±0 | 4/2 | 10.5 / 8.5<br>10.5 / 9.0<br>10.1 / 8.5<br>9.8 / 8.5 |
| 0c. TAP-Sensor mit 0.35 mm TG-500 | 3 M KCl<br>Puffer pH 4<br>Puffer pH 7<br>Puffer pH 10 | -3 / -2<br>-3/ -1<br>-1 / -1<br>±0 / ±0 | 3/2 | 8.0 / 6.7<br>8.2 / 7.0<br>8.0 / 6.9<br>7.9 / 6.8 |
| 1a. TAP-Sensor mit 2x 0.35 mm TG-500 | 3 M KCl<br>Puffer pH 4<br>Puffer pH 7<br>Puffer pH 10 | -3 / +1<br>-2 / ±0<br>-1 / ±0<br>+2 / +1 | 5/1 | 12.5 / 5.3<br>12.6 / 6.4<br>12.0 / 5.8<br>11.7 / 5.9 |
| 1b. TAP-Sensor mit 2x 0.35 mm TG-500 | 3 M KCl<br>Puffer pH 4<br>Puffer pH 7<br>Puffer pH 10 | -3 / -2<br>-2 / -1<br>-1 / -1<br>+1 / ±0 | 4/2 | 12.2 / 8.0<br>11.9 / 8.8<br>11.3 / 8.0<br>11.1 / 7.9 |
| 1c. TAP-Sensor mit 2x 0.35 mm TG-500 | 3 M KCl<br>Puffer pH 4<br>Puffer pH 7<br>Puffer pH 10 | -3 / ±0<br>-3 / +1<br>-2 / +1<br>+1 / +3 | 4/3 | 8.6 / 6.8<br>7.0 / 7.6<br>6.9 / 6.0<br>6.6 / 6.2 |
| 2a. Polyplast-Sensor mit 0.35 mm TG-500 | 3 M KCl<br>Puffer pH 4<br>Puffer pH 7<br>Puffer pH 10 | -3 / -2<br>-2 / -2<br>-1 / -2<br>+1 / +1 | 4/3 | 9.4 / 7.2<br>9.5 / 7.3<br>9.1 / 7.1<br>8.5 / 7.0 |
| 2b. Polyplast-Sensor mit 0.35 mm TG-500 | 3 M KCl<br>Puffer pH 4 | -3 / -2<br>-2 / -2 | 4/3 | 10.2 / 7.9<br>10.5 / 8.3 |

(fortgesetzt)

| **Sensor** | **Messfluid** | $U_{DIFF}$**/mV** n. 0 / ~30 | $\Delta U_{DI}$**FF/mV** n. 0 / ~30 | $R_{REF}$**/kOhm** n. 0 / ~30 |
|---|---|---|---|---|
| | Puffer pH 7<br>Puffer pH 10 | -1 / -1<br>+1 / +1 | | 10.0 / 7.6<br>9.4 / 7.3 |
| 2c. Polyplast-Sensor mit 0.35 mm TG-500 | 3 M KCl<br>Puffer pH 4<br>Puffer pH 7<br>Puffer pH 10 | -3 / -2<br>-2 / -2<br>-1 / -1<br>+2 / +1 | 5/3 | 10.5 / 8.9<br>11.0 / 9.1<br>10.6 / 8.5<br>10.2 / 8.5 |
| 3a. TAP-Sensor mit 0.50 mm TG-500 | 3 M KCl<br>Puffer pH 4<br>Puffer pH 7<br>Puffer pH 10 | -4 / +2<br>-3 / +2<br>-2 / +2<br>±0 / +4 | 4/2 | 13.7 / 6.6<br>13.9/6.9<br>13.3 / 6.7<br>13.0 / 6.7 |
| 3b. TAP-Sensor mit 0.50 mm TG-500 | 3 M KCl<br>Puffer pH 4<br>Puffer pH 7<br>Puffer pH 10 | -4 / ±0<br>-3 / ±0<br>-3 / ±0<br>-1 / +2 | 3/2 | 8.2 / 7.0<br>8.3 / 7.8<br>8.0 / 6.9<br>7.8 / 7.1 |
| 3c. TAP-Sensor mit 0.50 mm TG-500 | 3 M KCl<br>Puffer pH 4<br>Puffer pH 7<br>Puffer pH 10 | -4 / ±0<br>-3 / ±0<br>-1 / +1<br>-1 / +3 | 3/3 | 9.2 / 7.2<br>9.5 / 7.3<br>8.5 / 6.8<br>8.0 / 6.7 |
| 4a. TAP-Sensor mit 0.55 mm TG-2000 | 3 M KCl<br>Puffer pH 4<br>Puffer pH 7<br>Puffer pH 10 | -3 / -2<br>-2 / -2<br>-1 / -2<br>±0 / ±0 | 3/2 | 6.1 / 6.9<br>9.2 / 8.4<br>8.6 / 7.0<br>8.4 / 7.2 |
| 4b. TAP-Sensor mit 0.55 mm TG-2000 | 3 M KCl<br>Puffer pH 4<br>Puffer pH 7<br>Puffer pH 10 | -3 / +2<br>-3 / +1<br>-2 / +2<br>+1 / +3 | 4/2 | 6.2 / 5.6<br>6.9 / 6.2<br>6.6 / 5.5<br>6.3 / 5.5 |
| 4c. TAP-Sensor mit 0.55 mm TG-2000 | 3 M KCl<br>Puffer pH 4<br>Puffer pH 7<br>Puffer pH 10 | -3 / -2<br>-3 / -2<br>-2 / -2<br>±0 / -1 | 3/1 | 10.2 / 8.2<br>10.8 / 8.2<br>10.4 / 7.9<br>10.0 / 7.9 |
| 5a. TAP-Sensor mit 0.35 mm TG-500 | 3M KCl<br>Puffer pH 4<br>Puffer pH 7<br>Puffer pH 10 | -3 / -2<br>-3 / -2<br>-1 / -2<br>+1 / +1 | 4/3 | 7.8 / 6.6<br>8.0 / 6.8<br>7.8 / 6.5<br>7.7 / 6.4 |
| 6a. Polyplast-Sensor mit 0.35 mm TG-500 | 3 M KCl<br>Puffer pH 4<br>Puffer pH 7<br>Puffer pH 10 | -3/ -1<br>-2 / -2<br>-1 / -1<br>+2 / +1 | 5/3 | 7.7 / 6.6<br>8.0 / 7.1<br>7.7/6.7<br>7.6 / 6.6 |

Tabelle 2: Bestimmung des Diffusionspotentials und des Referenzwiderstands, wobei die Pufferlösungen im Vergleich zu Tabelle 1 in einem Verhältnis 1:10 verdünnt sind:

<table>
<tr><th>Sensor</th><th>Messfluid Puffer 1:10 verdünnt</th><th>$U_{DIFF}$/mV n. 0 / ~30</th><th>$\Delta U_{DI}$FF/mV n. 0 / ~30</th><th>$R_{REF}$/kOhm n. 0 / ~30</th></tr>
<tr><td>0b. TAP-Sensor mit 0.35 mm TG-500</td><td>3 M KCl unv.<br>Puffer pH 4<br>Puffer pH 7<br>Puffer pH 10</td><td>-3/-2<br>-/-3<br>-/-2<br>-/-2</td><td>- / 1</td><td>10.5 / 8.5<br>- / 14.1<br>- / 9.4<br>- / 9.4</td></tr>
<tr><td>0c. TAP-Sensor mit 0.35 mm TG-500</td><td>3 M KCl unv.<br>Puffer pH 4<br>Puffer pH 7<br>Puffer pH 10</td><td>-3/-2<br>-/-2<br>-/-3<br>-/-1</td><td>-/2</td><td>8.0/6.7<br>- / 11.6<br>- / 8.3<br>- / 8.0</td></tr>
<tr><td>1a. TAP-Sensor mit 2x 0.35 mm TG-500</td><td>3 M KCl unv.<br>Puffer pH 4<br>Puffer pH 7<br>Puffer pH 10</td><td>-3 / +1<br>- / ±0<br>- / -1<br>- / +2</td><td>-/3</td><td>12.5 / 5.3<br>- / 14.7<br>- / 10.4<br>- / 7.9</td></tr>
<tr><td>1b. TAP-Sensor mit 2x 0.35 mm TG-500</td><td>3 M KCl unv.<br>Puffer pH 4<br>Puffer pH 7<br>Puffer pH 10</td><td>-3 / -2<br>- / -2<br>- / -1<br>- / ±0</td><td>-/2</td><td>12.2 / 8.0<br>- / 14.7<br>- / 10.8<br>- / 9.7</td></tr>
<tr><td>1c. TAP-Sensor mit 2x 0.35 mm TG-500</td><td>3 M KCl unv.<br>Puffer pH 4<br>Puffer pH 7<br>Puffer pH 10</td><td>-3 / ±0<br>- / -1<br>- / ±0<br>- / +1</td><td>-/2</td><td>8.6 / 6.8<br>- / 13.4<br>- / 8.5<br>- / 8.0</td></tr>
<tr><td>2a. Poly-plast-Sensor mit 0.35 mm TG-500</td><td>3 M KCl unv.<br>Puffer pH 4<br>Puffer pH 7<br>Puffer pH 10</td><td>-3 / -2<br>-/-3<br>-/-2<br>-/-1</td><td>-/2</td><td>9.4 / 7.2<br>- / 13.4<br>- / 9.2<br>- / 9.0</td></tr>
<tr><td>2b. Poly-plast-Sensor mit 0.35 mm TG-500</td><td>3 M KCl unv.<br>Puffer pH 4<br>Puffer pH 7<br>Puffer pH 10</td><td>-3 / -2<br>- / -2<br>- / -1<br>- / ±0</td><td>-/2</td><td>10.2 / 7.9<br>- / 15.4<br>- / 9.6<br>- / 9.7</td></tr>
<tr><td>2c. Poly-plast-Sensor mit 0.35 mm TG-500</td><td>3 M KCl unv.<br>Puffer pH 4<br>Puffer pH 7<br>Puffer pH 10</td><td>-3 / -2<br>- / -2<br>- / -1<br>- / ±0</td><td>-/2</td><td>10.5 / 8.9<br>- / 15.2<br>- / 10.6<br>- / 10.1</td></tr>
<tr><td>3a. TAP-Sensor mit 0.50 mm TG-500</td><td>3 M KCl unv.<br>Puffer pH 4<br>Puffer pH 7<br>Puffer pH 10</td><td>-4 / +2<br>- / ±0<br>- / +2<br>- / +3</td><td>-/3</td><td>13.7 / 6.6<br>- / 12.2<br>- / 9.2<br>- / 8.6</td></tr>
<tr><td>3b. TAP-Sensor mit 0.50 mm TG-500</td><td>3 M KCl unv.<br>Puffer pH 4<br>Puffer pH 7<br>Puffer pH 10</td><td>-4 / ±0<br>- / -1<br>- / -1<br>- / +1</td><td>-/2</td><td>8.2 / 7.0<br>- / 13.7<br>- / 10.4<br>- / 8.9</td></tr>
<tr><td>3c. TAP-Sensor mit 0.50 mm TG-500</td><td>3 M KCl unv.<br>Puffer pH 4<br>Puffer pH 7<br>Puffer pH 10</td><td>-4 / ±0<br>- / -1<br>- / ±0<br>- / +1</td><td>-/2</td><td>9.2 / 7.2<br>- / 12.3<br>- / 8.3<br>- / 8.4</td></tr>
</table>

(fortgesetzt)

| Sensor | Messfluid Puffer 1:10 verdünnt | $U_{DIFF}$/mV n. 0 / ~30 | $\Delta U_{DI}$FF/mV n. 0 / ~30 | $R_{REF}$/kOhm n. 0 / ~30 |
|---|---|---|---|---|
| 4a. TAP-Sensor mit 0.55 mm TG-2000 | 3 M KCl unv.<br>Puffer pH 4<br>Puffer pH 7<br>Puffer pH 10 | -3 / -2<br>-/-3<br>-/-2<br>-/-1 | -/2 | 6.1 / 6.9<br>- / 13.2<br>- / 10.0<br>- / 8.8 |
| 4b. TAP-Sensor mit 0.55 mm TG-2000 | 3 M KCl unv.<br>Puffer pH 4<br>Puffer pH 7<br>Puffer pH 10 | -3 / +2<br>- / -1<br>- / ±0<br>- / +2 | -/3 | 6.2 / 5.6<br>- / 10.4<br>- / 7.8<br>- / 7.2 |
| 4c. TAP-Sensor mit 0.55 mm TG-2000 | 3 M KCl unv.<br>Puffer pH 4<br>Puffer pH 7<br>Puffer pH 10 | -3 / -2<br>-/-3<br>-/-3<br>-/-2 | - / 1 | 10.2 / 8.2<br>-/15.0<br>- / 10.3<br>- / 9.3 |
| 5a. TAP-Sensor mit 0.35 mm TG-500 | 3 M KCl unv.<br>Puffer pH 4<br>Puffer pH 7<br>Puffer pH 10 | -3/-2<br>-/-4<br>-/-3<br>-/-1 | -/3 | 7.8 / 6.6<br>- / 12.5<br>- / 8.5<br>- / 7.7 |
| 6a. Poly-plast-Sensor mit 0.35 mm TG-500 | 3 M KCl unv.<br>Puffer pH 4<br>Puffer pH 7<br>Puffer pH 10 | -3/-1<br>-/-2<br>-/-2<br>-/-1 | - / 1 | 7.7 / 6.6<br>- / 12.7<br>- / 8.9<br>- / 7.8 |

Tabelle 3: Bestimmung des Diffusionspotentials und des Referenzwiderstands, wobei die Pufferlösungen im Vergleich zu Tabelle 1 in einem Verhältnis 1:100 verdünnt sind:

| Sensor | Messfluid Puffer 1:100 verdünnt | $U_{DIFF}$/mV n. 0 / ~30 | $\Delta U_{DI}$FF/mV n. 0 / ~30 | $R_{REF}$/kOhm n. 0 / ~30 |
|---|---|---|---|---|
| 0b. TAP-Sensor mit 0.35 mm TG-500 | 3 M KCl unv.<br>Puffer pH 4<br>Puffer pH 7<br>Puffer pH 10 | -3 / -2<br>- / -2<br>- / -2<br>- / -2 | -/0 | 10.5/8.5<br>-/24.6<br>-/17.0<br>-/13.7 |
| 0c. TAP-Sensor mit 0.35 mm TG-500 | 3 M KCl unv.<br>Puffer pH 4<br>Puffer pH 7<br>Puffer pH 10 | -3 / -2<br>- / -3<br>- / -3<br>- / -2 | - / 1 | 8.0 / 6.7<br>- / 23.0<br>- / 13.6<br>-/ 13.3 |
| 1a. TAP-Sensor mit 2x 0.35 mm TG-500 | 3 M KCl unv.<br>Puffer pH 4<br>Puffer pH 7<br>Puffer pH 10 | -3 / +1<br>- / +1<br>- / +1<br>- / +1 | -/0 | 12.5 / 5.3<br>- / 26.3<br>-/17.7<br>-/14.3 |
| 1b. TAP-Sensor mit 2x 0.35 mm TG-500 | 3 M KCl unv.<br>Puffer pH 4<br>Puffer pH 7<br>Puffer pH 10 | -3 / -2<br>- / -1<br>- / -1<br>- / -1 | - / 1 | 12.2 / 8.0<br>- / 27.8<br>- / 18.6<br>-/16.3 |

(fortgesetzt)

| Sensor | Messfluid Puffer 1:100 verdünnt | $U_{DIFF}$/mV n. 0 / ~30 | $\Delta U_{DI}$FF/mV n. 0 / ~30 | $R_{REF}$/kOhm n. 0 / ~30 |
|---|---|---|---|---|
| 1c. TAP-Sensor mit 2x 0.35 mm TG-500 | 3 M KCl unv.<br>Puffer pH 4<br>Puffer pH 7<br>Puffer pH 10 | -3 / ±0<br>- ± 0<br>- / ±0<br>- / +1 | - / 1 | 8.6 / 6.8<br>- / 23.7<br>- / 15.4<br>- / 13.4 |
| 2a. Poly-plast-Sensor mit 0.35 mm TG-500 | 3 M KCl unv.<br>Puffer pH 4<br>Puffer pH 7<br>Puffer pH 10 | -3/-2<br>-/-3<br>-/-2<br>-/-2 | - / 1 | 9.4 / 7.2<br>- / 22.5<br>- / 17.7- /<br>13.7 |
| 2b. Poly-plast-Sensor mit 0.35 mm TG-500 | 3 M KCl unv.<br>Puffer pH 4<br>Puffer pH 7<br>Puffer pH 10 | -3 / -2<br>-/-2<br>-/-2<br>-/-1 | - / 1 | 10.2 / 7.9<br>- / 25.3<br>- / 20.2<br>- / 16.1 |
| 2c. Poly-plast-Sensor mit 0.35 mm TG-500 | 3 M KCl unv.<br>Puffer pH 4<br>Puffer pH 7<br>Puffer pH 10 | -3/-2<br>-/-2<br>-/-2<br>-/-1 | - / 1 | 10.5 / 8.9<br>- / 27.1<br>- / 20.6<br>-/16.3 |
| 3a. TAP-Sensor mit 0.50 mm TG-500 | 3 M KCl unv.<br>Puffer pH 4<br>Puffer pH 7<br>Puffer pH 10 | -4 / +2<br>- / +3<br>- / +2<br>- / +3 | - / 1 | 13.7 / 6.6<br>- / 22.5<br>- / 15.2<br>-/11.8 |
| 3b. TAP-Sensor mit 0.50 mm TG-500 | 3 M KCl unv.<br>Puffer pH 4<br>Puffer pH 7<br>Puffer pH 10 | -4 / ±0<br>- / -2<br>- / -1<br>- / ±0 | -/2 | 8.2 / 7.0<br>- / 24.0<br>- / 18.6<br>- / 15.2 |
| 3c. TAP-Sensor mit 0.50 mm TG-500 | 3 M KCl unv.<br>Puffer pH 4<br>Puffer pH 7<br>Puffer pH 10 | -4 / ±0<br>- / -1<br>- / ±0<br>- / ±0 | - / 1 | 9.2 / 7.2<br>- / 21.9<br>-/14.3<br>-/12.6 |
| 4a. TAP-Sensor mit 0.55 mm TG-2000 | 3 M KCl unv.<br>Puffer pH 4<br>Puffer pH 7<br>Puffer pH 10 | -3/-2<br>- / -3<br>- / -2<br>- / -2 | - / 1 | 6.1 / 6.9<br>- / 23.4<br>-/ 17.5<br>-/ 13.3 |
| 4b. TAP-Sensor mit 0.55 mm TG-2000 | 3 M KCl unv.<br>Puffer pH 4<br>Puffer pH 7<br>Puffer pH 10 | -3 / +2<br>- / +1<br>- / ±0<br>- / +1 | -/2 | 6.2 / 5.6<br>- / 21.6<br>- / 14.9<br>-/12.3 |
| 4c. TAP-Sensor mit 0.55 mm TG-2000 | 3 M KCl unv.<br>Puffer pH 4<br>Puffer pH 7<br>Puffer pH 10 | -3 / -2<br>- / -2<br>-/-3<br>- / -2 | - / 1 | 10.2 / 8.2<br>- / 24.5<br>- / 18.1<br>- / 14.7 |
| 5a. TAP-Sensor mit 0.35 mm TG-500 | 3 M KCl unv.<br>Puffer pH 4<br>Puffer pH 7<br>Puffer pH 10 | -3 / -2<br>- / -3<br>- / -3<br>- / -3 | - / 1 | 7.8 / 6.6<br>- / 21.5<br>- / 13.8<br>- / 12.4 |

(fortgesetzt)

| Sensor | Messfluid Puffer 1:100 verdünnt | $U_{DIFF}$/mV n. 0 / ~30 | $\Delta U_{DI}$FF/mV n. 0 / ~30 | $R_{REF}$/kOhm n. 0 / ~30 |
|---|---|---|---|---|
| 6a. Polyplast-Sensor mit 0.35 mm TG-500 | 3 M KCl unv.<br>Puffer pH 4<br>Puffer pH 7<br>Puffer pH 10 | -3 / -1<br>- / -2<br>- / -2<br>- / -2 | - / 1 | 7.7 / 6.6<br>- / 22.9<br>- / 16.7<br>- / 13.3 |

Tabelle 4: Bestimmung des Kaliumausflusses:

| lyt | Sensor mit verdicktem Elektronach 7 Tagen Applikation | Extraktionsvolumen (g) | Kalium (mg/Tag) ICP-MS | Kalium (mg/Tag) umger. üb. LF |
|---|---|---|---|---|
| 0b. | T-TG500-35-B<br>TAP-Sensor mit 0.35 mm TG-500 | 49.95 | - | 0.646 |
| 0c. | T-TG500-35-C<br>TAP-Sensor mit 0.35 mm TG-500 | 49.99 | - | 0.399 |
| 1a. | T-TG500-70-A<br>TAP-Sensor mit 2x 0.35 mm TG-500 | 49.43 | - | 0.278 |
| 1b. | T-TG500-70-B<br>TAP-Sensor mit 2x 0.35 mm TG-500 | 49.4 | - | 0.293 |
| 1c. | T-TG500-70-C<br>TAP-Sensor mit 2x 0.35 mm TG-500 | 50.71 | - | 0.297 |
| 2a. | P-TG500-35-A<br>Polyplast-Sensor mit 0.35 mm TG-500 | 51.99 | - | 0.500 |
| 2b. | P-TG500-35-B<br>Polyplast-Sensor mit 0.35 mm TG-500 | 50.68 | - | 0.460 |
| 2c. | P-TG500-35-C<br>Polyplast-Sensor mit 0.35 mm TG-500 | 50.66 | - | 0.679 |
| 3a. | T-TG500-50-A<br>TAP-Sensor mit 0.50 mm TG-500 | 50.37 | - | 0.386 |
| 3b. | T-TG500-50-B<br>TAP-Sensor mit 0.50 mm TG-500 | 51.3 | - | 0.351 |
| 3c. | T-TG500-50-C<br>TAP-Sensor mit 0.50 mm TG-500 | 50.33 | - | 0.391 |
| 4a. | T-TG2000-55-A<br>TAP-Sensor mit 0.55 mm TG-2000 | 50.41 | 0.27 | 0.258 |
| 4b. | T-TG2000-55-B<br>TAP-Sensor mit 0.55 mm TG-2000 | 51.02 | 0.26 | 0.276 |
| 4c. | T-TG2000-55-C<br>TAP-Sensor mit 0.55 mm TG-2000 | 50.07 | 0.24 | 0.252 |
| 5a. | T-TG500-35-0<br>TAP-Sensor mit 0.35 mm TG-500 | 50.51 | - | 0.425 |
| 6a. | P-TG500-35-0<br>Polyplast-Sensor mit 0.35 mm TG-500 | 50.51 | - | 0.499 |

Bezugszeichenliste

1 Einstabmesskette
2 Arbeitselektrode
3 Referenzelektrode
4 Außenrohr
5 Innenrohr
6 erstes elektrisch leitfähiges Fluid
7 zweites elektrisch leitfähiges Fluid
8 Vorratsgefäß
9 Glasmembran
10 Diaphragma
11 Stöpsel
12 Kopfteil
13 Vergussmasse
14 Dichtring
15 erstes Außenrohrlängsende
16 zweites Innenrohrlängsende
17 erstes Innenrohrlängsende
18 zweites Außenrohrlängsende
19 Innenrohrraum
20 Referenzraum
21 Dichtung

## Patentansprüche

1. Einstabmesskette (1) zum Messen eines Messfluides, mit einer Arbeitselektrode (2), einer Referenzelektrode (3), einem Diaphragma (10) und einem ersten elektrisch leitfähigen Fluid (6), das in Kontakt mit der Referenzelektrode (3) und dem Diaphragma (10) steht, so dass das Diaphragma (10) via das erste elektrisch leitfähige Fluid (6) elektrisch leitfähig mit der Referenzelektrode (2) verbunden ist,
**dadurch gekennzeichnet, dass** das Diaphragma (10) ein Hydrogel aufweist, wobei das Hydrogel ein thermoplastisches Elastomer ist.

2. Einstabmesskette (1) gemäß Anspruch 1, wobei das Hydrogel ein thermoplastisches Polyurethan aufweist.

3. Einstabmesskette (1) gemäß Anspruch 2, wobei das thermoplastische Polyurethan ein Blockcopolymer ist, das ein Monomer A

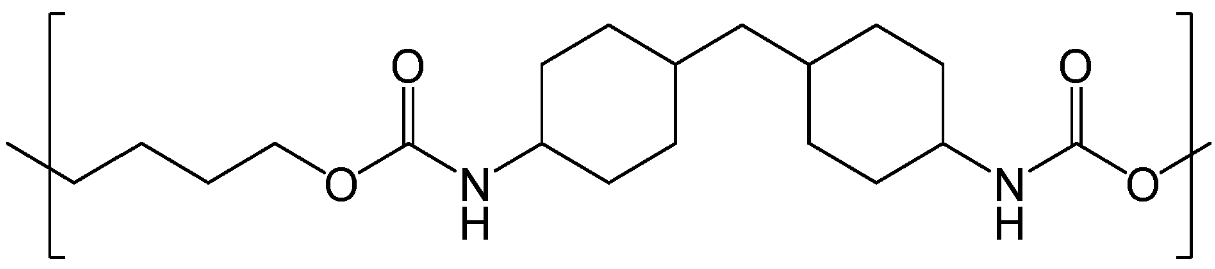

A

und ein Monomer B aufweist:

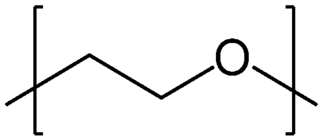

B .

4. Einstabmesskette (1) gemäß Anspruch 3, wobei das Massenverhältnis aus dem Monomer B zu dem Monomer A von 20 bis 100 beträgt, insbesondere von 30 bis 90.

5. Einstabmesskette (1) gemäß Anspruch 3 oder 4, wobei die zahlenmittlere molare Masse M des Blockcopolymers von $50*10^3$ g/mol bis $180*10^3$ g/mol beträgt, insbesondere von $80*10^3$ g/mol bis $150*10^3$ g/mol.

6. Einstabmesskette (1) gemäß Anspruch 1, wobei das Hydrogel ein Polymer auf Basis von Hydroxyethylmethacrylat, Vinylpyrrolidon und/oder Silikon aufweist.

7. Einstabmesskette (1) gemäß einem der Ansprüche 1 bis 6, wobei das Hydrogel ein smartes Hydrogel ist, insbesondere wobei das smarte Hydrogel ionenstärkeresponsiv und/oder thermoresponsiv ist.

8. Einstabmesskette (1) gemäß einem der Ansprüche 1 bis 7, wobei die Einstabmesskette (1) einen Referenzraum (20), in dem das erste elektrisch leitfähige Fluid (6) angeordnet ist, und eine Öffnung aufweist, in der das Diaphragma (10) angeordnet ist und die von dem Diaphragma (10) abgedichtet ist.

9. Einstabmesskette (1) gemäß Anspruch 8, wobei die Einstabmesskette (1) ein Außenrohr (4) und ein Innenrohr (5) aufweist, das innerhalb des Außenrohrs (5) angeordnet ist, wobei der Referenzraum (20) zwischen dem Außenrohr (4) und dem Innenrohr (5) angeordnet ist und die Öffnung ein ringförmiger Spalt zwischen dem Außenrohr (4) und dem Innenrohr (5) ist.

10. Einstabmesskette (1) gemäß Anspruch 8 oder 9, wobei die Einstabmesskette (1) einen für das Messfluid durchlässigen Stöpsel (11) aufweist, der in der Öffnung angeordnet ist und das Diaphragma (10) abstützt.

11. Einstabmesskette (1) gemäß Anspruch 9 oder 10, wobei das Innenrohr (5) ein erstes Innenrohrlängsende (17) aufweist, das geschlossen ausgebildet ist und eine Glasmembran (9) aufweist, wobei in dem Innenrohr (5) die Arbeitselektrode (2) und ein zweites elektrisch leitfähiges Fluid (7) angeordnet ist, das die Glasmembran (9) und die Arbeitselektrode (2) kontaktiert, so dass die Glasmembran (9) via das zweite elektrisch leitfähige Fluid (7) elektrisch leitfähig mit der Arbeitselektrode (2) verbunden ist.

12. Einstabmesskette (1) gemäß einem der Ansprüche 1 bis 11, wobei die Einstabmesskette (1) eine pH-Einstabmesskette und/oder ein Redox-Sensor ist, insbesondere wobei die pH-Einstabmesskette eine pH-Glaselektrode ist.

13. Verfahren zum Herstellen einer Einstabmesskette (1), mit den Schritten:

- Bereitstellen eines Außenrohrs (4) und eines Innenrohrs (5), das innerhalb des Außenrohrs (4) angeordnet ist, wobei ein Referenzraum (20) zwischen dem Außenrohr (4) und dem Innenrohr (5) angeordnet ist und das Außenrohr (4) und/oder das Innenrohr (5) eine Öffnung begrenzen;
- Anordnen einer Arbeitselektrode (2) innerhalb des Innenrohrs (5) und einer Referenzelektrode (3) innerhalb des Außenrohrs (4);
- Einbringen eines Hydrogels in seinem trockenen Zustand in die Öffnung, wodurch der Referenzraum (20) von dem Hydrogel begrenzt wird, wobei das Hydrogel ein thermoplastisches Elastomer ist;
- Einbringen eines ersten elektrisch leitfähigen Fluides (6) in den Referenzraum (20) und dadurch Kontaktieren des Hydrogels mit dem ersten elektrisch leitfähigen Fluid (6), wodurch das Hydrogel aufquillt und somit ein Diaphragma (10) bildet und die Öffnung abdichtet, sowie Kontaktieren der Referenzelektrode (3) mit dem ersten elektrisch leitfähigen Fluid (6), so dass das Diaphragma (10) via das erste elektrisch leitfähige Fluid (6) elektrisch leitfähig mit der Referenzelektrode (3) verbunden ist.

**14.** Verfahren gemäß Anspruch 13, bei dem das Außenrohr (4) ein erstes Außenrohrlängsende (15), in dessen Bereich das Diaphragma (10) angeordnet wird, und ein zweites Außenrohrlängsende (18) aufweist, via das das erste elektrisch leitfähige Fluid (6) in den Referenzraum (20) eingebracht wird.

**15.** Verfahren gemäß Anspruch 13, bei dem das Außenrohr (4) ein erstes Außenrohrlängsende (15), in dessen Bereich das Diaphragma (10) angeordnet wird, und ein zweites Außenrohrlängsende (18) aufweist, wobei das Verfahren den Schritt aufweist:

- Abdichten des zweiten Außenrohrlängsendes (18) vor dem Einbringen des ersten elektrisch leitfähigen Fluides (6) in den Referenzraum (20);

zum Einbringen des ersten elektrisch leitfähigen Fluides (6) in den Referenzraum (20) wird das erste Außenrohrlängsende (15) in das erste elektrisch leitfähige Fluid (6) getaucht, die Einstabmesskette (1) wird zusammen mit dem ersten elektrisch leitfähigen Fluid (6) in einen Vakuumbehälter eingebracht, der Vakuumbehälter wird evakuiert und anschließend belüftet, so dass das erste elektrisch leitfähige Fluid (6) via die Öffnung in den Referenzraum (20) eintritt.

**16.** Verfahren gemäß einem der Ansprüche 13 bis 15, wobei das Innenrohr (5) ein erstes Innenrohrlängsende (17), das geschlossen ausgebildet ist, und eine Glasmembran (9) aufweist, die im Bereich des ersten Innenrohrlängsendes (17) angeordnet wird, wobei in dem Innenrohr (5) die Arbeitselektrode (2) und ein zweites elektrisch leitfähiges Fluid (7) angeordnet werden, das die Glasmembran (9) und die Arbeitselektrode (2) kontaktiert, so dass die Glasmembran (9) via das zweite elektrisch leitfähige Fluid (7) elektrisch leitfähig mit der Arbeitselektrode (2) verbunden ist.

**17.** Verfahren gemäß einem der Ansprüche 13 bis 16, bei dem bei dem Einbringen des Hydrogels in seinem trockenen Zustand in die Öffnung das Hydrogel kleiner als die Öffnung ist und nach dem Einbringen des ersten elektrisch leitfähigen Fluides (6) in den Referenzraum (20) das gebildete Diaphragma (10) unter einer Druckspannung steht.

## Claims

**1.** Combination electrode (1) for measuring a fluid to be measured, having a working electrode (2), a reference electrode (3), a diaphragm (10) and a first electrically conductive fluid (6) which is in contact with the reference electrode (3) and the diaphragm (10) such that the diaphragm (10) is connected to the reference electrode (2) in an electrically conductive manner via the first electrically conductive fluid (6), **characterized in that** the diaphragm (10) has a hydrogel, wherein the hydrogel is a thermoplastic elastomer.

**2.** The combination electrode (1) according to claim 1, wherein the hydrogel has a thermoplastic polyurethane.

**3.** The combination electrode (1) according to claim 2, wherein the thermoplastic polyurethane is a block copolymer which has a monomer A

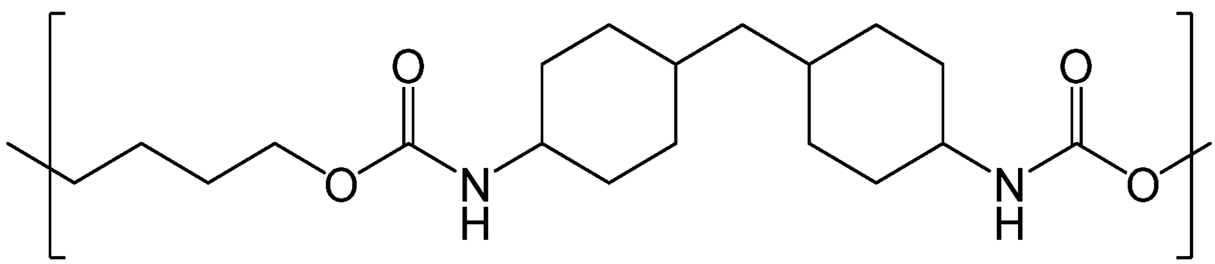

A

and a monomer B:

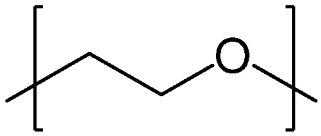

B .

4. The combination electrode (1) according to claim 3, wherein the mass ratio of the monomer B to the monomer A ranges from 20 to 100, in particular from 30 to 90.

5. The combination electrode (1) according to claim 3 or 4, wherein the number average molar mass M of the block copolymer ranges from $50*10^3$ g/mol to $180*10^3$ g/mol, in particular from $80*10^3$ g/mol to $150*10^3$ g/mol.

6. The combination electrode (1) according to claim 1, wherein the hydrogel has a polymer based on hydroxyethyl methacrylate, vinylpyrrolidone and/or silicone.

7. The combination electrode (1) according to any of claims 1 to 6, wherein the hydrogel is a smart hydrogel, in particular wherein the smart hydrogel is ionic strength-responsive and/or thermoresponsive.

8. The combination electrode (1) according to any of claims 1 to 7, wherein the combination electrode (1) has a reference space (20) in which the first electrically conductive fluid (6) is arranged, and an opening in which the diaphragm (10) is arranged and which is sealed by the diaphragm (10).

9. The combination electrode (1) according to claim 8, wherein the combination electrode (1) has an outer tube (4) and an inner tube (5) which is arranged within the outer tube (5), wherein the reference space (20) is arranged between the outer tube (4) and the inner tube (5), and the opening is an annular gap between the outer tube (4) and the inner tube (5).

10. The combination electrode (1) according to claim 8 or 9, wherein the combination electrode (1) has a plug (11) which is permeable to the fluid to be measured and which is arranged in the opening and supports the diaphragm (10).

11. The combination electrode (1) according to claim 9 or 10, wherein the inner tube (5) has a first inner tube longitudinal end (17), which is designed to be closed, and a glass membrane (9), wherein the working electrode (2) and a second electrically conductive fluid (7) which contacts the glass membrane (9) and the working electrode (2) are arranged in the inner tube (5) such that the glass membrane (9) is connected to the working electrode (2) in an electrically conductive manner via the second electrically conductive fluid (7).

12. The combination electrode (1) according to any of claims 1 to 11, wherein the combination electrode (1) is a pH combination electrode and/or a redox sensor, in particular wherein the pH combination electrode is a pH glass electrode.

13. A method for producing a combination electrode (1), having the steps:

- providing an outer tube (4) and an inner tube (5) which is arranged within the outer tube (4), wherein a reference space (20) is arranged between the outer tube (4) and the inner tube (5) and the outer tube (4) and/or the inner tube (5) delimit an opening;
- arranging a working electrode (2) within the inner tube (5) and a reference electrode (3) within the outer tube (4);
- introducing a hydrogel in its dry state into the opening, thus delimiting the reference space (20) with the hydrogel, wherein the hydrogel is a thermoplastic elastomer;
- introducing a first electrically conductive fluid (6) into the reference space (20) and thus contacting the hydrogel with the first electrically conductive fluid (6), whereby the hydrogel swells and thus forms a diaphragm (10) and seals the opening, and contacting the reference electrode (3) with the first electrically conductive fluid (6) such that the diaphragm (10) is connected to the reference electrode (3) in an electrically conductive manner via the first electrically conductive fluid (6).

14. The method according to claim 13, in which the outer tube (4) has a first outer tube longitudinal end (15), in the region of

which the diaphragm (10) is arranged, and a second outer tube longitudinal end (18) via which the first electrically conductive fluid (6) is introduced into the reference space (20).

**15.** The method according to claim 13, in which the outer tube (4) has a first outer tube longitudinal end (15), in the region of which the diaphragm (10) is arranged, and a second outer tube longitudinal end (18), wherein the method has the step:

- sealing the second outer tube longitudinal end (18) before the introduction of the first electrically conductive fluid (6) into the reference space (20);

for introducing the first electrically conductive fluid (6) into the reference space (20), the first outer tube longitudinal end (15) is immersed in the first electrically conductive fluid (6), the combination electrode (1), together with the first electrically conductive fluid (6), is introduced into a vacuum container, the vacuum container is evacuated and then ventilated, so that the first electrically conductive fluid (6) enters the reference space (20) via the opening.

**16.** The method according to any of claims 13 to 15, wherein the inner tube (5) has a first inner tube longitudinal end (17), which is designed to be closed, and a glass membrane (9) which is arranged in the region of the first inner tube longitudinal end (17), wherein the working electrode (2) and a second electrically conductive fluid (7) which contacts the glass membrane (9) and the working electrode (2) are arranged in the inner tube (5) such that the glass membrane (9) is connected to the working electrode (2) in an electrically conductive manner via the second electrically conductive fluid (7).

**17.** The method according to any of claims 13 to 16 in which, when the hydrogel in its dry state is introduced into the opening, the hydrogel is smaller than the opening and, after introducing the first electrically conductive fluid (6) into the reference space (20), the diaphragm (10) formed is under compressive stress.

**Revendications**

**1.** Électrode combinée (1) pour mesurer un fluide de mesure, avec une électrode de travail (2), une électrode de référence (3), un diaphragme (10) et un premier fluide électriquement conducteur (6) qui est en contact avec l'électrode de référence (3) et le diaphragme (10) de sorte que le diaphragme (10) soit connecté de manière électriquement conductrice à l'électrode de référence (2) par le premier fluide électriquement conducteur (6), **caractérisée en ce que** le diaphragme (10) comprend un hydrogel, l'hydrogel étant un élastomère thermoplastique.

**2.** Electrode combinée (1) selon la revendication 1, dans laquelle l'hydrogel comprend un polyuréthane thermoplastique.

**3.** Électrode combinée (1) selon la revendication 2, dans laquelle le polyuréthane thermoplastique est un copolymère à blocs comprenant un monomère A

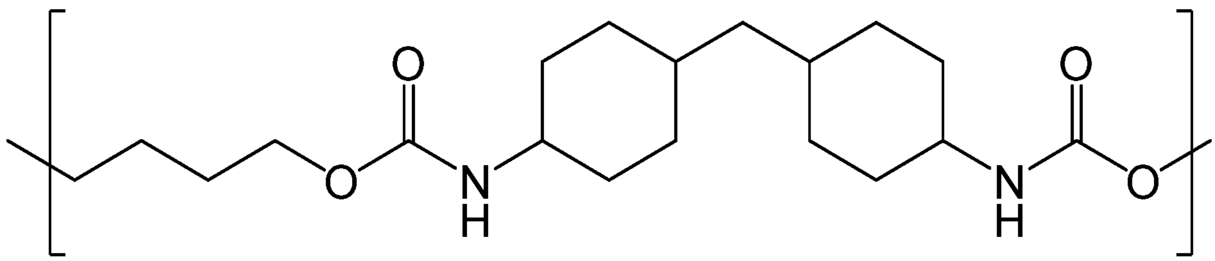

A

et un monomère B:

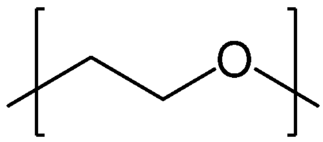

B

4. Électrode combinée (1) selon la revendication 3, dans laquelle le rapport en masse entre le monomère B et le monomère A est compris entre 20 et 100, en particulier entre 30 et 90.

5. Électrode combinée (1) selon la revendication 3 ou 4, dans laquelle la masse molaire moyenne numérique M du copolymère à blocs va de $50*10^3$ g/mol à $180*10^3$ g/mol, en particulier de $80*10^3$ g/mol à $150*10^3$ g /mol.

6. Electrode combinée (1) selon la revendication 1, dans laquelle l'hydrogel comprend un polymère à base de méthacrylate d'hydroxyéthyle, de vinylpyrrolidone et/ou de silicone.

7. Électrode combinée (1) selon l'une des revendications 1 à 6, dans laquelle l'hydrogel est un hydrogel intelligent, en particulier dans laquelle l'hydrogel intelligent est sensible à la force ionique et/ou thermosensible.

8. Électrode combinée (1) selon l'une des revendications 1 à 7, dans laquelle l'électrode combinée (1) présente une chambre de référence (20) dans laquelle le premier fluide électriquement conducteur (6) est disposé, et une ouverture, dans laquelle le diaphragme (10) est disposé, et qui est fermée de manière étanche par le diaphragme (10).

9. Électrode combinée (1) selon la revendication 8, dans laquelle l'électrode combinée (1) a un tube extérieur (4) et un tube intérieur (5) qui est disposé à l'intérieur du tube extérieur (5), dans laquelle la chambre de référence (20) est disposée entre le tube extérieur (4) et le tube intérieur (5) et l'ouverture est un espace annulaire entre le tube extérieur (4) et le tube intérieur (5).

10. Électrode combinée (1) selon la revendication 8 ou 9, dans laquelle l'électrode combinée (1) comprend un bouchon (11) perméable au fluide de mesure, qui est disposé dans l'ouverture et supporte le diaphragme (10).

11. Électrode combinée (1) selon la revendication 9 ou 10, dans laquelle le tube intérieur (5) a une première extrémité longitudinale du tube intérieur (17) qui est fermée et présente une membrane en verre (9), l'électrode de travail (2) et un deuxième fluide électriquement conducteur (7), qui entre en contact avec la membrane en verre (9) et l'électrode de travail (2), étant disposés dans le tube intérieur (5), de sorte que la membrane en verre (9) soit connectée de manière électriquement conductrice avec l'électrode de travail (2) par le deuxième fluide électriquement conducteur (7).

12. Électrode combinée (1) selon l'une des revendications 1 à 11, dans laquelle l'électrode combinée (1) est une électrode pH combinée et/ou un capteur redox, en particulier dans laquelle l'électrode pH combinée est une électrode pH en verre.

13. Méthode pour produire une électrode combinée (1), avec les étapes de:

- prévoir un tube extérieur (4) et un tube intérieur (5) qui est disposé à l'intérieur du tube extérieur (4), dans laquelle une chambre de référence (20) est disposée entre le tube extérieur (4) et le tube intérieur (5) et le tube extérieur (4) et/ou le tube intérieur (5) délimitent une ouverture;
- disposer une électrode de travail (2) à l'intérieur du tube intérieur (5) et une électrode de référence (3) à l'intérieur du tube extérieur (4);
- introduire un hydrogel à son état sec dans l'ouverture, afin que la chambre de référence (20) soit délimitée par l'hydrogel, l'hydrogel étant un élastomére thermoplastique;
- introduire un premier fluide électriquement conducteur (6) dans la chambre de référence (20) et mettre ainsi en contact l'hydrogel avec le premier fluide électriquement conducteur (6), afin que l'hydrogel se gonfle et forme donc un diaphragme (10) et ferme de manière étanche l'ouverture, et mettre en contact l'électrode de référence (3) avec le premier fluide électriquement conducteur (6), de sorte que le diaphragme (10) soit connecté de

manière électriquement conductrice à l'électrode de référence (3) par le premier fluide électriquement conducteur (6).

**14.** Méthode selon la revendication 13, dans laquelle le tube extérieur (4) présente une première extrémité longitudinale (15) du tube extérieur, dans la région de laquelle le diaphragme (10) est disposé, et une deuxième extrémité longitudinale (18) du tube extérieur, à travers laquelle le premier fluide électriquement conducteur (6 ) est introduit dans la chambre de référence (20).

**15.** Méthode selon la revendication 13, dans laquelle le tube extérieur (4) présente une première extrémité longitudinale du tube extérieur (15), dans la région de laquelle le diaphragme (10) est disposé, et une deuxième extrémité longitudinale du tube extérieur (18 ), la méthode comprenant l'étape de:

- fermer de manière étanche la deuxième extrémité longitudinale du tube extérieur (18) avant l'introduction du premier fluide électriquement conducteur (6) dans la chambre de référence (20);

pour introduire le premier fluide électriquement conducteur (6) dans la chambre de référence (20), la première extrémité longitudinale du tube extérieur (15) est plongée dans le premier fluide électriquement conducteur, l'électrode combinée (1) est introduite dans un récipient sous vide ainsi que le premier fluide électriquement conducteur (6), le récipient sous vide est évacué et donc purgé, de sorte que le premier fluide électriquement conducteur (6) entre dans la chambre de référence (20) à travers l'ouverture.

**16.** Méthode selon l'une des revendications 13 à 15, dans laquelle le tube intérieur (5) a une première extrémité longitudinale du tube intérieur (17) qui est fermée, et une membrane en verre (9) qui est disposée dans la région de la première extrémité longitudinale du tube intérieur (17), l'électrode de travail (2) et un deuxième fluide électriquement conducteur (7), qui entre en contact avec la membrane en verre (9) et l'électrode de travail (2), étant disposés dans le tube intérieur (5), de sorte que la membrane en verre (9) soit connectée de manière électriquement conductrice à l'électrode de travail (2) par le deuxième fluide électriquement conducteur (7).

**17.** Méthode selon l'une des revendications 13 à 16, dans laquelle, quand l'hydrogel est introduit dans l'ouverture à son état sec, l'hydrogel est plus petit que l'ouverture et après l'introduction du premier fluide électriquement conducteur (6) dans la chambre de référence (20) le diaphragme formé (10) est soumis à un effort de compression.

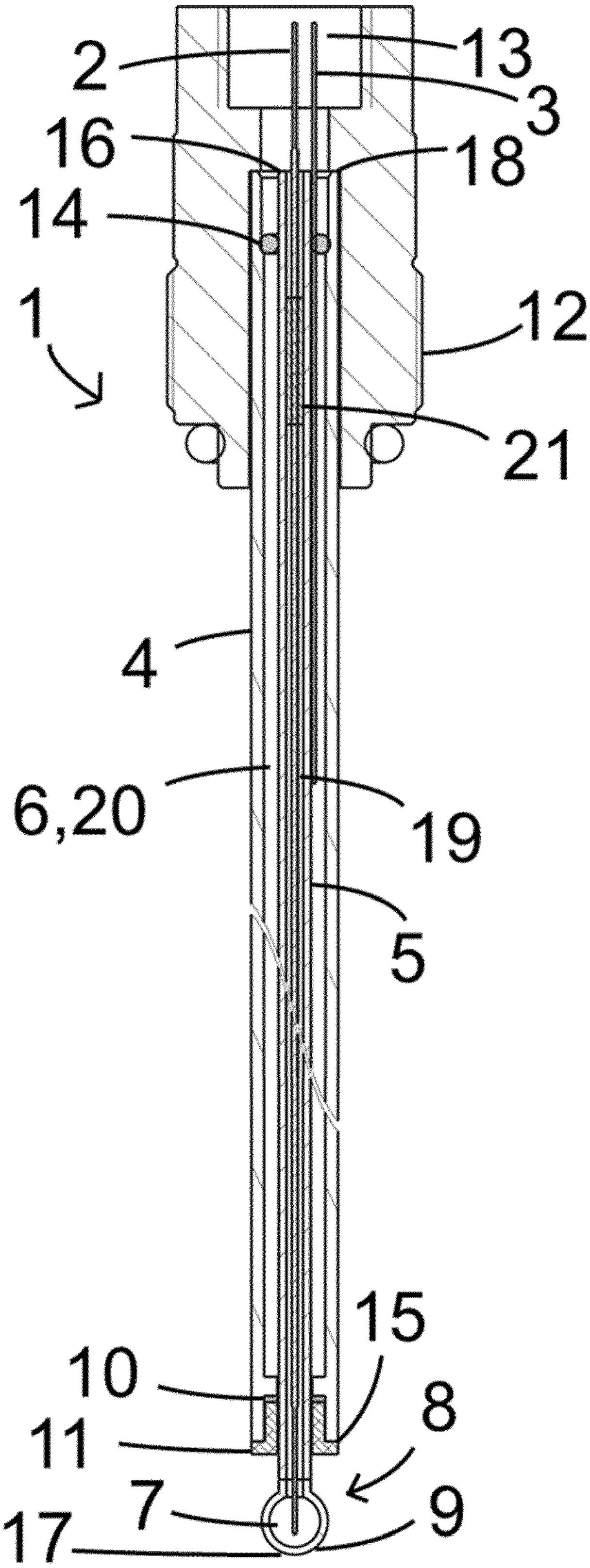


Fig. 1

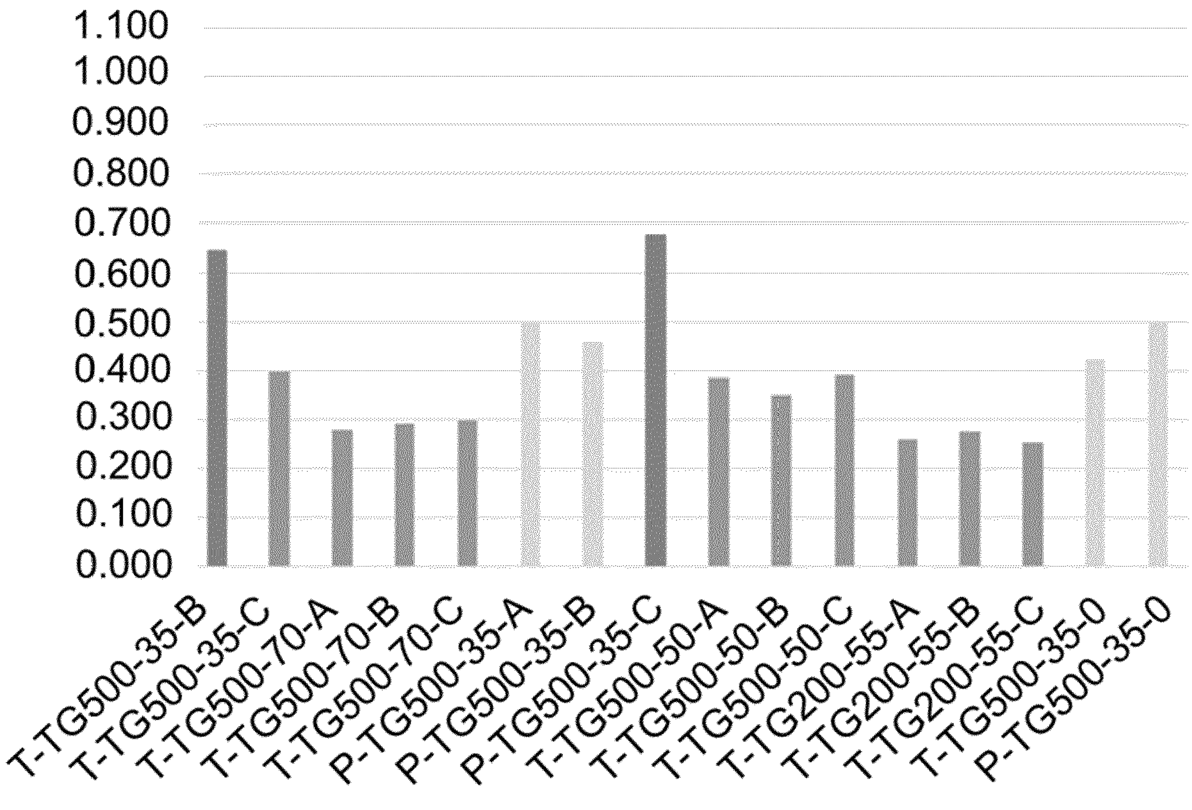
1.100
1.000
0.900
0.800
0.700
0.600
0.500
0.400
0.300
0.200
0.100
0.000
T-TG500-35-B
T-TG500-35-C
T-TG500-70-A
T-TG500-70-B
T-TG500-70-C
P-TG500-35-A
P-TG500-35-B
P-TG500-35-C
T-TG500-50-A
T-TG500-50-B
T-TG500-50-C
T-TG200-55-A
T-TG200-55-B
T-TG200-55-C
T-TG500-35-0
P-TG500-35-0

Fig. 2

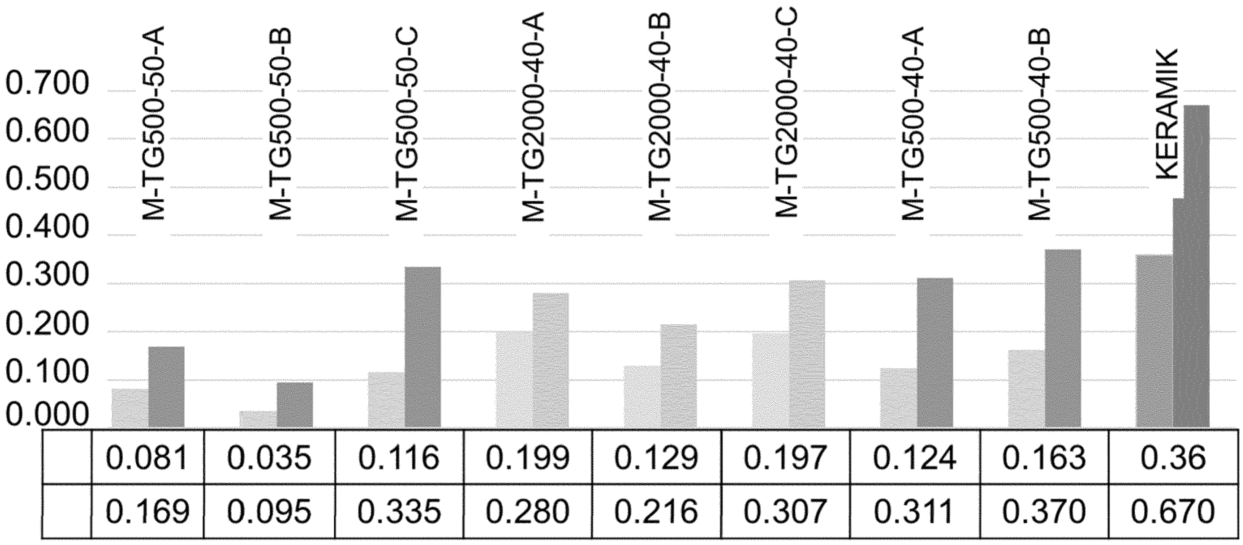


| | | | | | | | | | |
|---|---|---|---|---|---|---|---|---|---|
| | 0.081 | 0.035 | 0.116 | 0.199 | 0.129 | 0.197 | 0.124 | 0.163 | 0.36 |
| | 0.169 | 0.095 | 0.335 | 0.280 | 0.216 | 0.307 | 0.311 | 0.370 | 0.670 |

Fig. 3

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 102009055092 A1
- US 2005133369 A1
- EP 1172648 A1
- WO 2005073704 A1